# EUROPÄISCHE PATENTSCHRIFT

(11) **EP 4 150 203 B1**
(45) Veröffentlichungstag und Bekanntmachung des Hinweises auf die Patenterteilung: **04.03.2026**
(21) Anmeldenummer: 21723686.8
(22) Anmeldetag: 29.04.2021
(51) Int. Cl.: F03B 17/00, F03B 17/06, H02J 15/00

(54) **SYSTEM ZUR ENERGIESPEICHERUNG UND -RÜCKGEWINNUNG**
SYSTEM FOR STORING AND RECOVERING ENERGY
SYSTÈME DE STOCKAGE ET DE RÉCUPÉRATION D'ÉNERGIE

(30) Priorität: 11.05.2020 DE 102020112724
(43) Veröffentlichungstag der Anmeldung: 22.03.2023
(73) Patentinhaber: TAUSCHER, Johann, 1220 Wien (AT)
(72) Erfinder: TAUSCHER, Johann, 1220 Wien (AT)
(74) Vertreter: Schwarz & Partner Patentanwälte GmbH
(86) Internationale Anmeldenummer: PCT/EP2021/061295
(87) Internationale Veröffentlichungsnummer: WO 2021/228569

(56) Entgegenhaltungen:
- WO-A1-2019/061002
- WO-A1-93/06367
- DE-A1- 102018 111 997
- US-B1- 7 579 700

## Beschreibung

### Technisches Feld

Die Erfindung betrifft ein System zur Energiespeicherung und -rückgewinnung.

### Hintergrund

Diskontinuierliche Energiegewinnungsprozesse zur Speisung von Stromnetzen, wie sie beispielsweise bei Windenergie vorkommen, führen dazu, dass die bereitgestellte Energie die benötigte Energie zeitweise übersteigt. Im Unterscheid dazu kann zu anderen Zeiten Energieknappheit herrschen, wenn gerade kein Wind bläst (und gerade ein hoher Energiebedarf herrscht). Um diese Schwankungen auszugleichen werden Systeme zur Energiespeicherung und -rückgewinnung eingesetzt, die immer dann Energie speichern, wenn ein Energieüberschuss bei der Primärerzeugung von Energie (z.B. Im Wind-Energie-Park) vorhanden ist, und die gespeicherte Energie für Zeiten abrufbar halten, wenn die Primärerzeugung von Energie den vorherrschenden Energiebedarf nicht sättigen kann.

Ein solches System zur Energiespeicherung und -rückgewinnung ist bespielweise aus der EP 3 321 501 B1 bekannt. Dieses System weist einen Druckluftbehälter und einen Druckwasserbehälter auf, die permanent unter Druckgleichgewicht stehen. Vor Inbetriebnahme wird der Druckluftspeicher und damit auch der Druckwasserbehälter mittels Kompressor je nach Auslegung auf einen Betriebsdruck gebracht. Zur Energieeinspeisung in das System kann Wasser über eine Hochdruckpumpe aus einem Wasserspeicher in den Druckwasserbehälter gepumpt werden. Durch die anwachsende Wassermenge im Druckwasserbehälter wird die Luft, die sich darin befindet, in den Druckluftbehälter, der mit dem Druckwasserbehälter verbunden ist, verdrängt. Durch die Volumenzunahme des Wassers und die damit verbundene Komprimierung der Luft kommt es zu einem Druckanstieg in den beiden verbundenen Behältern. Bei Energiebedarf wird ein Energiebereitstellungszyklus durchlaufen, bei dem das unter Druck stehende Wasser bis zur vollständigen Entleerung des Druckwasserbehälters durch eine Gleichdruckturbine abfließt und dabei die Turbine antreibt. Ein an der Turbine angeschlossener Generator, der durch die Turbine angetrieben wird, speist den mit seiner Hilfe erzeugten elektrischen Strom in ein Stromnetz ein.

Dieses System hat sich aus mehreren Gründen als nachteilig erwiesen.

Einer der Gründe besteht darin, dass der Wasserspeicher viel Platz benötigt und dieses offene System der Umwelt ausgesetzt ist, sodass eine Verschmutzung (Sedimentierung) des Wassers im Wasserspeicher im Laufe der Zeit unumgänglich ist und zur Vermeidung der Verunreinigung und möglicher daraus resultierender Fehlfunktionen das System mit kostenintensiven baulichen Maßnahmen geschützt werden muss. Die Sedimentierung kann zu einer Beschädigung der Turbinenbecher von z.B. einer Pelton-Turbine führen.

Ein weiterer Grund besteht darin, dass eine Wasser-Hochdruckpumpe für den laufenden Betrieb notwendig ist, wobei die Wasser-Hochdruckpumpe das Wasser aus dem Wasserspeicher in den Druckwasserbehälter hochpumpt und dabei Arbeit gegen den im Druckluftbehälter anwachsenden Luftdruck leisten muss. Die elektrische Versorgung erfolgt dabei aus dem öffentlichen Stromnetz. Somit ist zusätzlich zu dem Kompressor eine weitere teure und verschleißanfällige System-Hochdruck-Komponenten notwendig, die zumindest die Wasser-Hochdruckpumpe und die damit verbundenen Rohrleitungen umfasst.

Ein weiterer Grund besteht darin, dass jeder Energiebereitstellungszyklus durch das Wasservolumen im Druckwasserbehälter beschränkt ist und bevor ein neuer Energiebereitstellungszyklus durchlaufen werden kann, wie zuvor bereits erwähnt, der Druckwasserbehälter unter der Erbringung von Hubarbeit beim Hochpumpen des Wassers und den sich dabei gleichzeitig im Druckluftbehälter aufbauenden Luftdruck wieder mit Wasser beladen werden muss. Dieser Wiederbeladungsvorgang ist energie- und zeitaufwändig, und somit erst wieder möglich, wenn im Stromnetz ein Energieüberschuss vorliegt. Zudem verhindert diese Systemauslegung einen kontinuierlichen Betrieb.

Des Weiteren kommt es durch die permanenten Druckunterschiede in den Behältern und Rohen über den gesamten Betriebsbereich, der sich zwischen einem vollständig mit Wasser gefüllten und einem vollständig entleerten Druckwasserbehälter und einem mit Druckluft gefüllten und mit entspannter Luft gefüllten Druckluftbehälter erstreckt, zu einer extrem dynamischen Belastung der Behälter und Leitungen. Diese Komponenten müssen dementsprechend ausgelegt sein, was zu einer teuren Realisierung führt. Auch sind im Laufe der Zeit im Bereich der Verbindungsstellen der Systemkomponenten Lecks bedingt durch die immer wiederkehrenden dynamischen Belastungsschwankungen unvermeidbar.

Weiters ist der kontinuierliche Druckabfall sehr ungünstig, weil dadurch aufwendige Regelungen für Spannung und Frequenz (Herz) erforderlich werden. Durch den kontinuierlichen Druckabfall kommt es auch zu erheblichen Problemen bei der Einspeisung in das öffentliche Netz, da Lieferschwankungen seitens der Netzbetreiber unerwünscht sind.

Ein weiteres System zur Energiespeicherung ist auch aus US 7 579 700 B1 bekannt.

Die Erfindung hat sich vor diesem Hintergrund die Aufgabe gestellt, ein verbessertes System zur Energiespeicherung und -rückgewinnung bereitzustellen, sodass die erörterten Probleme vermieden sind.

### Zusammenfassung der Erfindung

Diese Aufgabe wird durch ein System zur Energiespeicherung und -rückgewinnung gemäß Anspruch 1 gelöst.

Durch die erfindungsgemäßen Maßnahmen geht der weitere Vorteil einher, dass das System vollständig ohne zusätzliche Flüssigkeits-Hochdruckpumpen auskommt, was die Anzahl der zu installierenden wie auch zu wartenden Komponenten erheblich reduziert, somit die Investitionskosten und auch die Betriebskosten verringert, was letztendlich zu einem kosteneffizienteren System führt, bei dem die Ausfallsicherheit durch die Reduktion von hochbelasteten Systemkomponenten wesentlich höher ist, als dies bei anderen Systemen mit besagten Hochdruck-Flüssigkeitspumpen der Fall ist.

Die Flüssigkeitsbewegung durch die Turbineneinheit hindurch wird ausschließlich durch den während eines Energiebereitstellungszyklus im Wesentlichen konstanten Arbeitsgasdruck bewerkstelligt, der von oben auf die Flüssigkeitsoberfläche wirkt und die Flüssigkeit von dem einen Flüssigkeitsbehälter durch die Turbineneinheit in den anderen Flüssigkeitsbehälter befördert.

Da die zumindest beiden Flüssigkeitsbehälter auf im Wesentlichen gleichem, bevorzugt identem, Niveau positioniert sind, ist bei der Flüssigkeitsbeförderung auch im Wesentlichen keine Hubarbeit gegen die Schwerkraft zu leisten. Befinden sich die Flüssigkeitsbehälter nicht auf identischem Niveau, z.B. mit einem Niveauunterscheid von ca. 10 Meter, weil eine Hanglage dies erforderlich macht, so kann dies durch den Absolut-Wert des konstanten Drucks des Arbeitsgases beim jeweiligen Energiebereitstellungszyklus berücksichtigt werden.

Des Weiteren steht die von dem einen Flüssigkeitsbehälter in den anderen Flüssigkeitsbehälter übergeführte Flüssigkeit dort sofort wieder für den nächsten Energiebereitstellungszyklus zur Verfügung. Gemäß einer ersten Konfiguration des Systems kann die Flüssigkeit mit Hilfe des Arbeitsgases wieder zurück in den ersten Flüssigkeitsbehälter befördert werden und dabei die Turbineneinheit durchströmen und dann im ersten Flüssigkeitsbehälter wieder für den nächsten Energiebereitstellungszyklus bereitstehen, wonach der Zyklus aus Hin- und Retourbeförderung der Flüssigkeit von neuem beginnen kann.

Bei einer anderen Konfiguration des Systems kann die Flüssigkeit von dem zweiten Flüssigkeitsbehälter in einen weiteren, also dritten Flüssigkeitsbehälter befördert werden, während elektrischer Strom generiert wird. Von dem dritten Flüssigkeitsbehälter aus kann die Flüssigkeit in weiterer Folge mit Hilfe des Arbeitsgases wieder zurück in den ersten Flüssigkeitsbehälter befördert werden, während auch dabei wieder elektrischer Strom generiert wird, wonach dieser Zyklus von neuem beginnen kann.

Daher erschließt sich ein weiterer Vorteil darin, dass die Energieausbeute des Systems nicht durch das in dem Flüssigkeitsbehälter gespeicherte Flüssigkeitsvolumen beschränkt ist, da die Flüssigkeit ja quasikontinuierlich in aufeinanderfolgenden Zyklen mit Hilfe des Arbeitsgases zwischen den jeweiligen Flüssigkeitsbehältern befördert wird, wobei während der jeweiligen Beförderungsphase immer elektrischer Strom generiert wird, sich also aneinander anschließenden Energiebereitstellungszyklen zu einer kontinuierlichen Energiebereitstellung kombinieren lassen.

Bei diesem quasi-kontinuierlichen Beförderungsprozess ist vorteilhaft hervorzuheben, dass die Beförderung der Flüssigkeit mit konstantem Flüssigkeitsdruck erfolgt, weil ja auch der Arbeitsgasdruck des Arbeitsgases während das Energiebereitstellungszyklus konstant gehalten wird. Die stellt sicher, dass sich die Turbine mir konstanter Frequenz dreht und folglich auch der mit Hilfe des mit der Turbine gekoppelten Generators erzeugte Strom mit im Wesentlichem konstanter Frequenz generiert wird und somit möglichst einfach in das Stromnetz eingespeist werden kann.

Das hier präsentierte System kann dank seiner geringen Anforderungen an die Umgebung an vielen Orten und in unterschiedlichsten Dimensionen umgesetzt werden. So kann das System beispielsweise als Notenergiespeicher für entlegene Städte dienen oder Unternehmen mit großen Photovoltaikanlagen (beispielsweise auf Fertigungshallen) helfen, die gewonnene Energie sinnvoll zu nutzen, oder klassisch mit entsprechender Leistungsfähigkeit in der Nähe eines Kraftwerks bzw. eines Windparks zur Energiespeicherung und Energiebereitstellung dienen. Dementsprechend kann sich die Anforderung an die Flüssigkeit nicht nur in der Menge, sondern auch in den Eigenschaften unterscheiden.

Es ist vorteilhaft, wenn die Flüssigkeit in der Nähe des Betriebsbereichs, also beim Arbeitsgasdruck und bei Temperaturen, die im System auftreten, keine Phasenumwandlung durchläuft. Zumindest sollte die Dichte weitestgehend konstant sein, sodass der Druck im Flüssigkeitsbehälter sich nicht zufolge der Änderung der Dichte ändert.

Die Viskosität der Flüssigkeit, ist bevorzugt so zu wählen, dass die Verluste im System zufolge der Flüssigkeitsbewegung möglichst gering sind. Es sind also im allgemeinen Flüssigkeiten von Vorteil, die im Betriebsbereich eine geringe Viskosität aufweisen. Im Allgemeinen erfüllt Wasser diese Anforderung und ist in vielen Anwendungsfällen, insbesondere bei großen Anlagen, eine gute Wahl. Es können, insbesondere bei kleineren Anlagen, aber auch Flüssigkeiten mit einer niedrigeren Viskosität vorteilhaft sein. So weisen z.B. die nicht brennbaren Flüssigkeiten Trichlorethen und Chloroform beispielsweise eine niedrigere Viskosität als Wasser auf. Wenn Flüssigkeiten mit einer anderen Viskosität als jener von Wasser verwendet werden, kann eine Anpassung der Turbine von Vorteil sein.

Ein weiterer Aspekt, der in Bezug auf die Flüssigkeit zu beachten sein kann, ist die Kavitation bzw. der Verdampfungsdruck. Fällt der statische Druck, der nach Bernoulli mit steigender Geschwindigkeit sinkt, unter den Verdampfungsdruck, kommt es zur Bildung von Gasbläschen (Kavitation). Das kann zu Schäden an der Turbine führen. Die Flüssigkeit und die Turbineneinheit müssen also aufeinander abgestimmt sein. Der Effekt der Kavitation ist hauptsächlich bei Kaplanturbinen und Francistrubinen zu berücksichtigen. Solche Turbinen können jedoch unter Beachtung ihrer spezifischen Eigenschaften natürlich auch in diesem System zur Anwendung kommen. So kann z.B. eine Kaplanturbine bei einem Druck des Arbeitsgases von nur 10 Bar (dies entspricht 100 Meter Wassersäule) zur Anwendung kommen.

Bedingt durch den Umstand, dass bei diesem System die Flüssigkeit permanent in einem abgeschlossenen Systembereich bleibt, kann hier also, anders als bei anderen Systemen, nicht nur die Turbineneinheit auf die Flüssigkeit ausgelegt werden, sondern auch die Flüssigkeit so gewählt werden, dass optimale aufeinander abgestimmte Verhältnisse vorliegen. Diese Tatsache öffnet, ähnlich wie bei der Nutzung von Kältemittel in Kältemaschinen, eine Vielzahl von neuen Möglichkeiten beim Einstellen bzw. Definieren der Systemeigenschaften. Somit sind hier gedanklich auch neue Flüssigkeiten und Flüssigkeitskombinationen mitberücksichtigt, die sich für den Fachmann aufgrund der hier vermittelten Lehre erschließen.

Die Dimensionen eines Flüssigkeitsspeichers können an die zu erzeugenden elektrische Energie angepasst sein, also z.B. für lange Energiebereitstellungszyklen angepasst sein. So können sich bei diesem System beispielsweise auch eine oder einige Million(en) Kubikmeter Flüssigkeit im Flüssigkeitsspeicher befinden. Bei diesen Massen können die Kosten der Flüssigkeit von wesentlicher Bedeutung sein. Die Flüssigkeitsspeicher können jedoch auch auf kürzere Energiebereitstellungszyklen optimiert sein und somit entsprechend kleiner ausgeführt sein.

Weiterhin kann zu beachten sein, dass bei anderen, offenen Systemen, bei denen die Flüssigkeit mit der Umwelt in Verbindung steht, und damit immer auch ein Flüssigkeitsverbrauch bzw. eine Abgabe in die Umwelt einhergeht, die Auswahl der Flüssigkeit sehr eingeschränkt ist. Andere Flüssigkeiten als Wasser sind bei diesen offenen Systemen kaum denkbar, weil einerseits die Kosten für eine Flüssigkeit, die Verbraucht wird, bei anderen Flüssigkeiten als Wasser enorm wäre und andererseits viele dieser Flüssigkeiten die Umwelt belasten würden.

Bei dem erfindungsgemäßen System können jedoch auch andere Flüssigkeiten, als Wasser mit unterschiedlichen vorteilhaften Eigenschaften verwendet werden.

Bei verhältnismäßig kleinem Flüssigkeitsvolumen können neben Wasser auch andere Flüssigkeiten vorteilhaft sein, die die zuvor genannten Eigenschaften aufweisen aber auch zum Beispiel dadurch überzeugen, dass sie nicht oder nur wenig verdampfen, oder dadurch überzeugen, dass sie bessere korrosive Eigenschaften aufweisen. Demgegenüber kann bei verhältnismäßig größeren Flüssigkeitsvolumen der Einsatz von Wasser vorteilhaft sein, weil diese Flüssigkeit unverhältnismäßig günstig und leicht verfügbar ist. Weil die Flüssigkeit jedoch weitestgehend im System bleibt, da es sich um einen geschlossenen Kreislauf handelt, ist es auch hier möglich, durch Zusätze die Eigenschaften preiswert an den jeweiligen Betriebsbereich anzupassen.

Die Flüssigkeitsbehälter können aus verschiedensten Materialien gefertigt sein, solange sie den Wasser- und Arbeitsgasdruck zuzüglich der üblichen konstruktiven Maßnahmen und Sicherheiten aushalten und mit dem Arbeitsgas und der Flüssigkeit verträglich sind, also z.B. keine Korrosion zu erwarten ist. So können es beispielsweise Stahl- oder Betonbehälter sein. Auch ein Aufbau aus mehreren miteinander kombinierten Materialien oder auch Verbundmaterialein ist möglich. So kann der Flüssigkeitsbehälter beispielsweise aus einer mechanisch stabilen Strukturschicht, wie beispielsweise aus Beton bzw. Stahlbeton bestehen, und im inneren dieser Strukturschicht eine flüssigkeits- und arbeitsgasundurchlässige sowie chemisch resistente Schutzschicht aus beispielsweise Polymeren und/oder Metall(en) bzw. metallischen Legierungen aufweisen.

Solche Flüssigkeitsbehälter, wie im Übrigen auch optional die weiteren Komponenten des Systems, können z.B. teilweise oder auch vollständig unterirdisch angeordnet sein.

Auch die Verwendung von natürlichen Untergrundspeichern als Flüssigkeitsbehälter ist möglich. Der Arbeitsgasdruck kann hierbei auf die entsprechenden geologischen Gegebenheiten ausgelegt werden.

Die verschiedenen Flüssigkeitsbehälter müssen nicht das exakt gleiche Volumen aufweisen. Es muss lediglich ein Arbeits-Flüssigkeitsvolumen definiert werden, dass von dem einen Flüssigkeitsbehälter durch die Turbineneinheit in den anderen Flüssigkeitsbehälter befördert werden kann. Hierbei ist es Vorteilhaft, wenn das Arbeits-Flüssigkeitsvolumen dem Volumen des kleinsten Flüssigkeitsbehälters entspricht, sodass ein möglichst großes Arbeits-Flüssigkeitsvolumen pro Energiebereitstellungszyklus genutzt werden kann.

Weiterhin kann es von Vorteil sein, wenn die Flüssigkeitsbehälter, die ein größeres Volumen als das Arbeits-Flüssigkeitsvolumen aufweisen, mit mehr Flüssigkeit befüllt werden, also mit einem Rest-Flüssigkeitsvolumen das der Differenz zwischen dem Volumen des Behälters und dem Arbeits-Flüssigkeitsvolumen entspricht, sodass das maximale Arbeitsgas-Volumen, das dem Arbeits-Flüssigkeitsvolumen entspricht, bei allen Flüssigkeitsbehältern gleich bzw. ähnlich ist. Dies erleichtert die Steuerung der Gasmengen-Befüllung der einzelnen Flüssigkeitsbehälter, da die einzublasende Gasmenge pro Energiebereitstellungzyklus immer die gleiche ist.

Auch kann es von Vorteil sein, wenn die Flüssigkeit vor und/oder nach der Turbineneinheit so geführt wird, dass sie möglichst glatt und mit möglichst wenig Verwirbelungsverlusten von bzw. in die restliche Flüssigkeit geleitet wird.

Dies kann beispielsweise dadurch gelöst werden, dass die Flüssigkeitsbehälter ein Steigrohr aufweisen. Dies kann zu einem gleichmäßigeren Fluss der Flüssigkeit aus dem Flüssigkeitsbehälter in die Turbineneinheit beitragen. Bei Anwendung des Steigrohres kann die Mündung des Steigrohres im Bodenbereich des jeweiligen Flüssigkeitsbehälters liegen, oder in einer pumpensumpfähnlichen Struktur bzw. Vertiefung münden, sodass die im Flüssigkeitsbehälter befindliche Flüssigkeit fast vollständig durch den Druck des Arbeitsgases, das von oben auf die Flüssigkeit einwirkt, aus dem Flüssigkeitsbehälter beförderbar ist.

Auch kann es von Vorteil sein, wenn die Mündung des Steigrohres einen Filter aufweist. Diese Maßnahme kann insbesondere bei der Nutzung von natürlichen Untergrundspeichern helfen, die Turbineneinheit vor Festkörpern zu schützen, die sich ggf. aus der Wand solcher natürlicher Untergrundspeicher lösen können. Diese Problematik stellt sich bei geschlossenen Systemen mit künstlichen Flüssigkeitsbehältern üblicherweise nicht.

Die Turbineneinheit verbindet mindestens zwei Flüssigkeitsbehälter miteinander, mit dem Ziel, die Bewegungsenergie der Flüssigkeit in elektrische Energie umzuwandeln. Dass die Turbineneinheit zwei Flüssigkeitsbehälter miteinander verbindet bedeutet hierbei, dass die Turbineneinheit der Flüssigkeit in einem der beiden Flüssigkeitsbehälter zu einer gewünschten Zeit ermöglicht, durch die Turbineneinheit in den anderen Flüssigkeitsbehälter zu gelangen. Zum Erreichen des Ziels der Energieumwandlung weist die Turbineneinheit mindestens eine Turbine und mindestens einen Generator auf.

Um möglichst geringe Strömungsverluste zu verursachen, kann es von Vorteil sein, wenn für jeden Flüssigkeitstransport von einem Flüssigkeitsbehälter in einen anderen Flüssigkeitsbehälter eine eigene Turbine verwendet wird.

Für einen Fall, bei dem nur zwei Flüssigkeitsbehälter vorgesehen sind, bedeutet dies, dass zwischen den beiden Flüssigkeitsbehältern für jede Flussrichtung eine Turbine vorgesehen ist. Das kann insbesondere bei großen Anlagen, die lange Betrieben werden, wirtschaftliche Vorteile mit sich bringen, weil die Strömungsverluste bedingt durch eine einfachere, zum Beispiel auch kürzere, Leitungsführung verringert sind.

Das System kann aber auch mit nur einer Turbine oder einer beliebigen Anzahl an Turbinen in der Turbineneinheit realisiert sein. Hierfür kann die Turbineneinheit neben der mindestens einen Turbine und dem mindestens einen Generator ein Flüssigkeitsleitsystem aufweisen, das die Flüssigkeit aus einem Flüssigkeitsbehälter der gerade mit Arbeitsgas befüllt (also dessen Flüssigkeit herausgedrückt) wird, durch die mindestens eine Turbine in den anderen Flüssigkeitsbehälter leitet, der mit der Flüssigkeit befüllt wird. Das Flüssigkeitsleitsystem muss im nächsten Energiebereitstellungszyklus die Fließrichtung der Flüssigkeit ändern. Bei einer Variante mit zwei Flüssigkeitsbehältern also beispielsweise die Flüssigkeit so führen, dass diese jetzt aus dem neu befüllten Flüssigkeitsbehälter durch die mindestens eine Turbine zurück in den zuvor gefüllten und nun leeren Flüssigkeitsbehälter geführt wird.

Für eine Ausbildungsform, die ein Flüssigkeitsleitsystem aufweist, um die Flüssigkeit aus unterschiedlichen Flüssigkeitsbehältern zu mindestens einer gleichen Turbine zu leiten, können beispielsweise Ventile benutzt werden. Diese Ventile können selbstregelnde Ventile sein. Diese Ventile können beispielsweise aufgrund des Druckunterschieds dann öffnen, wenn der Druck im mit Flüssigkeit gefüllten Flüssigkeitsbehälter auf der Seite der Flüssigkeit dem Arbeitsgasdruck und der Druck im zu befüllenden Flüssigkeitsbehälter dem Umgebungsdruck entspricht. Die Flüssigkeit kann dann für einen Energiebereitstellungszyklus von dem einen Flüssigkeitsbehälter durch die mindestens eine Turbine in den korrespondierenden anderen Flüssigkeitsbehälter fliesen. Durch die im nächsten Energiebereitstellungszyklus geänderte Arbeitsgasbereitstellung durch die Arbeitsgas-Bereitstellungseinheit öffnen in diesem Energiebereitstellungszyklus die entsprechenden anderen Ventile, sodass die Flüssigkeit wieder, jetzt aus dem anderen Flüssigkeitsbehälter kommend, durch die Turbineneinheit hindurchgeleitet werden kann.

Die Komponenten des Systems in dieser Ausführungsform sind besonders kostensparend. Bevorzugt sind die Ventile jedoch steuerbare Ventile. Diese haben den Vorteil, dass sie nicht zwingend Energie aus dem System benötigen, um zu öffnen oder zu schließen und dass die Schaltung (also das Ein- und Ausschalten der Ventile oder in anderen Worten das Öffnen und Schließen der Ventile) optimiert ablaufen kann. So kann die Anlauf- und Auslaufzeit sowie die Schaltzeit minimiert werden.

Die Turbineneinheit kann eine Turbinensteuereinheit aufweisen, die für die Schaltung der Ventile zuständig ist. Die Turbinensteuereinheit kann beispielsweise auch so ausgebildet sein, dass sie mit einer Arbeitsgas-Bereitstellungseinheit-Steuereinheit, die die Arbeitsgas-Bereitstellungseinheit regelt, kommuniziert, und die beiden Steuereinheiten können ihre Entscheidungen aufeinander anpassen. Es ist auch möglich, dass eine zentrale Steuereinheit, die Turbinensteuereinheit und die Arbeitsgas-Bereitstellungseinheit-Steuereinheit koordiniert oder dass sie (unter anderem) die Aufgaben beider übernimmt. Es kann also eine Steuereinheit vorgesehen sein, die auch aus zwei oder drei Sub-Einheiten bestehen kann.

Die Turbineneinheit kann auch mehrere Turbinen gleicher Größe aufweisen, die parallel geschaltet sind und die wahlweise zum Einsatz kommen können, um im kombinierten Betrieb die Leistung des Systems zu erhöhen. Die Turbineneinheit kann auch mehrere Turbinen unterschiedlicher Größe aufweisen, die parallel geschaltet sind und wahlweise zum Einsatz kommen können, um den Wirkungsgrad und/oder die Leistung und/oder die Kapazität des Systems zu verbessern bzw. zu optimieren. Diese können dann beispielsweise Bedarfsabhängig angesteuert werden.

Die Zulaufverrohrung und die Ablaufverrohrung muss hierfür entsprechend dimensioniert sein.

Bei diesem System können beispielsweise Gleichdruckturbinen, insbesondere PeltonTurbinen verwendet werden. Diese überzeugen mit ihrem hohen Wirkungsgrad. Im Übrigen sei an dieser Stelle bereits erwähnt, dass je nach Konfiguration des Systems unterschiedliche Turbinen-Typen zum Einsatz kommen können, wie beispielsweise die bereits erwähnten.

Es ist möglich einen oder mehrere Generatoren zu verwenden, die Turbinen und Generatoren auf einer oder mehreren Wellen zu betreiben und diese mit Getrieben und Kupplungen zu verbinden. In der Regel wird jedoch immer nur eine Turbine mit einem Generator auf einer Welle betrieben, dies horizontal oder vertikal.

Die Arbeitsgas-Bereitstellungseinheit speichert bei einem Energieüberangebot Energie, bevorzugt primär in Form von unter Druck stehendem Arbeitsgas in einem Druckspeicher. Bei Energiebedarf stellt die Arbeitsgas-Bereitstellungseinheit Arbeitsgas mit im Wesentlichen konstantem Druck zur Verfügung. Dieses Arbeitsgas kann dann wie beschreiben von den übrigen Systemkomponenten zur Energieumwandlung genutzt werden. Dafür ist die Arbeitsgas-Bereitstellungseinheit mit den Flüssigkeitsbehältern verbunden. Das bedeutet, dass die Arbeitsgas-Bereitstellungseinheit zu einer gewünschten Zeit Arbeitsgas mit einem im Wesentlichen konstanten Arbeitsgasdruck in einen für diese Zeit ausgewählten Flüssigkeitsbehälter, der initial mit Flüssigkeit gefüllt ist, leiten kann, wo das Arbeitsgas während des Energiebereitstellungszyklus auf die Flüssigkeit einen konstanten Druck ausübt. Die Bereitstellung des Arbeitsgas mit dem gewünschten Arbeitsgasdruck kann durch die Arbeitsgas-Bereitstellungseinheit-Steuereinheit oder durch die zentrale Steuereinheit, die noch weitere Aufgaben übernimmt, gesteuert werden.

Zur Erzeugung des im Wesentlichen konstanten Arbeitsgasdrucks des Arbeitsgases ist eine Druckregelung vorgesehen. Die Druckregelung kann über ein oder mehrere Druckregler geschehen. Einfache selbstregelnde Druckminderer können diese Aufgabe übernehmen. Bevorzugt handelt es sich jedoch um steuerbare Druckreglungssysteme. So ein Druckregelungssystem kann beispielsweise ein oder mehrere stufenlos steuerbare Ventile aufweisen. Auch kann ein solche Druckregelungssystem mehrere Drosseln, insbesondere mit unterschiedlichen aber unveränderbaren Querschnitten, aufweisen, die durch vorgeschaltete Ventile gezielt angesteuert werden können. Auch eine Kombination von stufenlos steuerbaren Ventilen und unterschiedlicher Drosseln konstanten Querschnitts in verschiedenen seriellen und/oder parallelen Anordnungen ist möglich. Ein Druckregelungssystem kann des Weiteren verschiedene Sensoren aufweisen, die beispielsweise Druck, Durchfluss oder Temperatur messen. Ein solches Druckregelungssystem kann beispielsweise auch verschiedene Aktoren aufweisen, die das Ventil oder die Ventile steuern. Zum Steuern bzw. Regeln des im Wesentlichen konstanten Arbeitsgasdruckes, der durch den Druckregler eingestellt wird, kann eine Steuereinheit eingesetzt werden. Diese Steuereinheit kann beispielsweise eine Druckregelugs-Steuereinheit sein, die als primäre Aufgabe das Steuern oder Regeln des Druckes hat. Die Aufgabe kann aber auch von einer Arbeitsgas-Bereitstellungseinheit-Steuereinheit oder von einer zentralen Steuereinheit übernommen werden. Das Druckregelungssystem kann daneben noch weitere Komponenten aufweisen, wie beispielsweise Sicherheitsventile, Vorwärmer, Wärmetauscher, Entfeuchter usw. Auch können hier bekannte Systeme zum Bereitstellen eines konstanten Drucks adaptiert werden, wie z.B. Gas-Druckregelanlagen (GDRA) bzw. Gas-Druckregel- und Messanlagen (GDRMA) die für die Erdgasförderung bekannt sind.

Das Arbeitsgas kann ein Gas oder auch ein Gasgemisch sein. Das Arbeitsgas, bzw. im Falle eines Gasgemisches seine Komponenten, sollten, wie auch die Flüssigkeit, möglichst keine ungewollten Phasenumwandlung in der Nähe des Betriebsbereichs aufweisen. Wobei zu beachten ist, dass der Betriebsbereich des Gases größer ist als jener der Flüssigkeit, weil das Arbeitsgas auch zur Energiespeicherung genutzt werden kann. Es kann also zwischen einem Arbeits-Betriebsbereich, der im groben in Hinblick auf Druck und Temperatur dem Arbeitsbereich der Flüssigkeit entspricht, und einem Speicher-Betriebsbereich unterschieden werden. Wenn das Gas unter einem höheren Druck als dem Arbeitsgasdruck gespeichert wird könnte es auch vorteilhaft sein, wenn das Arbeitsgas in diesem Speicher-Betriebsbereich in eine Phase mit höherer Dichte wechselt, umso mehr Energie auf gleichem Raum (bzw. gleiche Energie auf kleinerem Raum) speichern zu können. Des Weiteren sollte das Arbeitsgas möglichst kompatibel mit den restlichen Komponenten des Systems sein, um beispielsweise Korrosion der metallischen Komponenten oder Versprödung der Dichtungen zu vermeiden. Weil bei diesem System bevorzugt ein Großteil des Arbeitsgases im System bleibt, kann es also sinnvoll sein, Gase oder Gasgemische mit diesen Eigenschaften zu wählen. Im Allgemeinen erfüllt Luft diese Aufgaben jedoch recht gut. So kann Luft für viele Anwendungsfälle eine gute Lösung sein. Es kann auch von Vorteil sein, die Anteile der Luft so zu verändern oder Komponenten zu entfernen oder hinzuzufügen, dass die Eigenschaften verbessert werden. Ein klassisches Beispiel wäre es, die Luft zu entfeuchten, um beispielsweise die korrosiven Eigenschaften zu verbessern aber auch die Gefahr von Vereisung bei der Entspannung der komprimierten Luft zu reduzieren. Wenn das System jedoch so ausgelegt ist, dass das Arbeitsgas möglichst lange im System zirkulieren soll, kann es auch wirtschaftlich sein, Gas-Komponenten hinzuzufügen, die sich positiv auf die wartungsfreie Betriebszeit des Systems auswirken. Ein höherer Anteil an Edelgasen könnte beispielsweise zu einem weniger aggressiven Gasgemisch führen und Korrosion hintanhalten.

Weiterhin können bei dem System Maßnahmen vorgesehen sein, die ein Verdunsten der Flüssigkeit hintanhalten und somit die Wahrscheinlichkeit reduzieren, dass das Arbeitsgas (im Laufe der Zeit) Feuchtigkeit aufnimmt. Um das Arbeitsgas im Wesentlichen trocken zu halten können z.B. auch Gas-Entfeuchter vorgesehen sein.

Weitere, besonders vorteilhafte Ausgestaltungen und Weiterbildungen der Erfindung ergeben sich aus den abhängigen Ansprüchen sowie der nachfolgenden Beschreibung.

Weiterhin hat es sich als besonders vorteilhaft erwiesen, dass bei dem System keine offenen Flüssigkeitsbehälter vorgesehen sein müssen, wie z.B. ein nach oben hin offenes Flüssigkeits-Becken. Die zumindest zwei Flüssigkeitsbehälter sind bevorzugt hinsichtlich der enthaltenen Flüssigkeit, abgeschlossene Behälter, zwischen denen die Flüssigkeit durch die Turbineneinheit hindurch überströmen kann. Lediglich Verdunstungsverluste der Flüssigkeit können durch Zufuhr von Flüssigkeit von außerhalb der Flüssigkeitsbehälter her kompensiert werden. Damit geht der Vorteil einher, dass die in den Flüssigkeitsbehältern enthaltene Flüssigkeit über die Betriebszeit des Systems betrachtet im Wesentlichen sauber bleibt und so gut wie keine Maßnahmen zur Reinigung und/oder Filtration vorgesehen werden müssen. Die geschlossene Ausbildung erlaubt es auch die Flüssigkeitsbehälter unterirdisch, also in der Landschaft versenkt, oder sogar in einem See oder dem Meer versenkt zu positionieren. Dies erlaubt die Energiespeicherung von überschüssiger elektrischer Energie mit Hilfe der Arbeitsgas-Bereitstellungseinheit de facto unmittelbar am Ort der Entstehung bzw. in der unmittelbaren Nähe, wie z.B. in der Nähe von Windrädern oder Gezeitenkraftwerken, sodass die gespeicherte Energie dezentral zur Verfügung steht. Dabei kann auf platzraubende, lange und damit teure Verrohrung für die Flüssigkeitsbeförderung zu entlegenen Flüssigkeitsspeichern verzichtet werden, wie es z.B. bei allen anderen Speicherkraftwerken der Fall ist, bei denen Flüssigkeit gegen die Schwerkraft angehoben werden muss. Die Flüssigkeitsspeicher können auf vorteilhaft Weise gleich Vorort in die lokale Infrastruktur des Kraftwerks integriert werden, wie z.B. dort unterirdisch versenkt werden und dementsprechend mit kurzen Rohren miteinander verbunden werden.

Gemäß einem weiteren Aspekt kann es von Vorteil sein, dass die Arbeitsgas-Bereitstellungseinheit zur Rückführung und Verwertung des in einem der Flüssigkeitsbehälter enthaltenen Arbeitsgases ausgebildet ist.

Durch das Rückführen des Arbeitsgases mit einem höheren Druck als dem Umgebungsdruck muss dieses zum Speichern in einem Druckspeicher, der unter einem bestimmten Speichergasdruck steht, der höher als der Arbeitsgasdruck ist, weniger stark verdichtet werden, als ein Gas das vom Umgebungsdruck auf den Speichergasdruck verdichtet wird. So kann Energie beim Verdichten gespart werden.

Durch das Rückführen des Arbeitsgases verbleibt auch immer der Großteil des Gases im System. Anders als bei anderen Systemen, bei denen zum Druckausgleich ein Entlüftungsventil eines Flüssigkeitsbehälters, in dem ein Gasdruck herrscht, der höher als der Umgebungsdruck ist, wird hier ein großer Teil des Arbeitsgases wieder zurückgeführt und nicht in die Umgebung abgegeben. Zusätze, die die Eigenschaften des Gases beeinflussen, können so wirtschaftlicher genutzt werden. Auch können Einrichtungen wie ein (stärkerer) Filter, der das Gas (bzw. die Umgebungsluft), das von der Arbeitsgas-Bereitstellungseinheit bei der Energiespeicherung aufgenommen wird, filtert sinnvoll sein. Bei herkömmlichen Systemen ist jedoch bekannt, dass Filter den Wirkungsgrad der Verdichter verringern. Durch bewusstes Weglassen von Filtern werden daher oft eventuelle Schäden in Kauf genommen. Weil bei dem erfindungsgemäßen System jedoch ein Großteil des Arbeitsgases, das der Arbeitsgas-Bereitstellungseinheit zur Verdichtung zugeführt wird, aus dem System selber kommt oder in anderen Worten im System zirkuliert und daher nicht gefiltert werden muss, kann es sinnvoll sein, den Teil der neu in das System eingebracht wird, also bei Verwendung von Luft nur die zugeführte Umgebungsluft, zu filtern. Dies führt zu einem System, das in Summe einen guten Wirkungsgrad aufweist und dabei zuverlässiger läuft als herkömmliche Systeme.

Die nötigen strukturellen Maßnahmen bestehe im Wesentlichen daraus, dass ein Arbeitsgas-Rückleitungssystem vorgesehen ist, das die Flüssigkeitsbehälter mit der Arbeitsgas-Bereitstellungseinheit verbindet. Diese Maßnahme ermöglicht die Rückführung und Nutzung des Arbeitsgas, das sich am Ende eines Energiebereitstellungszyklus in dem betreffenden (im Wesentlichen entleerten) Flüssigkeitsbehälter befindet, von dem betreffenden Flüssigkeitsbehälter in die Arbeitsgas-Bereitstellungseinheit. Dabei wird der Druck des Arbeitsgases vom zunächst vorliegenden Arbeitsgasdruck sukzessive reduziert, bis ein End-Druck vorliegt, der minimal dem Umgebungsdruck entspricht.

Gemäß einem weiteren Aspekt weist die Arbeitsgas-Bereitstellungseinheit einen Verdichter und einen daran ausgangsseitig angeschlossenen Druckspeicher auf, wobei der Verdichter zum Verdichten von Gas, insbesondere Umgebungsluft, zwecks Speicherung des verdichteten Gases mit einem Speichergasdruck in dem Druckspeicher vorgesehen ist.

Der Druckspeicher kann äquivalent zu den Flüssigkeitsbehältern aus verschiedensten Materialien oder Materialkombinationen bestehen, solange er den Anforderungen mit ausreichenden Sicherheiten genügt. Der Druckspeicher muss mit ausreichender Reserve dem Speichergasdruck standhalten. Auch hier sind beispielsweise natürlichen Untergrundspeichern möglich. Aber auch Stahlspeicher, Betonspeicher, Stahlbetonspeicher oder ähnliche können beispielsweise überirdisch oder unterirdisch umgesetzt werden. Auch Kombinationen der genannten Speicher mit beispielsweise Polymeren als Wandbeschichtung oder in das Wandmaterial integriert zur Verbesserung der Eigenschaften, wie beispielsweise zum Verringern der Diffusion des Arbeitsgases, sind möglich. Auch Werkstoffverbunde und/oder Verbundwerkstoffe können genutzt werden. Der Verdichter kann in seiner einfachsten Form einstufig ausgebildet sein und lediglich zum Verdichten eines Gases, z.B. Umgebungsluft, vom Ausgangsdruck weg, z.B. Umgebungsdruck bei Luft, auf den Speichergasdruck ausgelegt sein. Bevorzugt kann er jedoch mehrstufig ausgebildet sein, weil damit höhere Drücke auf effizientere Weise zu erreichen sind.

Beim Verdichten von Gasen entsteht naturgemäß Wärme. Diese Wärme kann auf verschiedene Weise verwendet werden, um die Effizienz des Systems zu erhöhen. So kann diese beispielsweise einem Wärmespeicher, insbesondere einem Feststoffspeicher, zugeführt werden. Die gespeicherte Wärme kann dann beispielsweise zu einem späteren Zeitpunkt genutzt werden, wenn Arbeitsgas aus dem Druckspeicher für die Energiebereitstellung genutzt wird und dafür entspannt wird. Beim Entspannen kühlt das Arbeitsgas ab. Die Wärme kann hier also beispielsweise genutzt werden, um das auszugleichen. Eine weitere Möglichkeit zur Optimierung wäre beispielsweise, alternativ oder zusätzlich, die Wärme zu nutzen, um eine Flüssigkeit zu verdampfen. Die verdampfte Flüssigkeit kann dann beispielsweise einer Dampfturbine zugeführt werden, die Bewegungsenergie bereitstellt, die genutzt werden kann, um die Effizienz des Systems zu erhöhen. Der Vorteil dieser Lösung gegenüber Wärmespeichern liegt insbesondere darin, dass die Bewegungsenergie gleich genutzt werden kann oder effizient in gut und lange speicherbare Energieformen (z.B. elektrische Energie) umgewandelt werden kann. Die Wärmespeicher wären hingegen nur für eine gewisse Zeit auf einem brauchbaren Temperaturniveau.

Anstelle eines Verdichters und des Druckspeichers kann auch ein Dampfgenerator verwendet werden, der die anstelle von Luft als Arbeitsgas einen Dampf als Arbeitsgas bereitstellt. Die Abwärme des Verdichters könnte auch zur Erwärmung bzw. Temperierung der Flüssigkeit in den Flüssigkeitsbehältern genutzt werden, um z.B. in den Wintermonaten eine Vereisung zu vermeiden. So könnte auch die Flüssigkeit im Fall von Wasser auf ca. 4 °C temperiert werden, weil das Wasser bei dieser Temperatur die größte Dichte aufweist und damit ein höherer bzw. optimaler Wirkungsgrad bei der Turbineneinheit zu erzielen ist.

Bevorzugt ist der Verdichter jedoch als mehrstufiger Verdichter ausgeführt und derart konfiguriert, dass zur Verdichtung wahlweise die Umgebungsluft unter Einsatz aller Verdichter-Stufen oder das aus dem Flüssigkeitsbehälter rückgeführte Arbeitsgas unter Einsatz jener Verdichter-Stufe(n), die für eine Verdichtung eines Gases mit einem Druck oberhalb des Umgebungsdrucks optimiert ist/sind, zur Anwendung kommt.

Bei dem mehrstufigen Verdichter kann es sich beispielsweise um mehrere Verdichter-Stufen auf einer Welle oder separaten Wellen handeln, oder auch um mehrere Verdichter-Pakete, die zum Verdichten eines Gases mit unterschiedlichen Drücken sowie unterschiedlicher Druckunterschiede ausgebildet sind. Es kann sich auch um eine Kombination der beiden Varianten handeln. So kann es sich bei dem mehrstufigen Verdichter um mehrere Verdichter-Pakete handeln, die jeweils eine Welle haben, auf der mehrere Verdichter-Stufen angebracht sind.

Es ist beispielsweise auch möglich, dass die Wellen durch schaltbare Kupplungen gekoppelt sind. Auch können verschiedene Wellen mittels Getrieben, und diese eventuell mit Kupplungen, permanent oder schaltbar verbunden sein.

Der mehrstufige Verdichter kann beispielsweise so ausgelegt sein, dass das ihm aus dem Flüssigkeitsbehälter rückgeführte Arbeitsgas immer zu jener Verdichter-Stufe geführt wird, die am besten für den jeweiligen Druck, den das Arbeitsgas aufweist, ausgelegt ist. Dies kann beispielsweise durch ein Arbeitsgas-Rückleitsystem mit entsprechend selbstregelnden oder bevorzugt steuerbaren Ventilen realisiert sein. Die Steuerung bzw. Regelung der Ventile kann durch eine eigene Verdichter-Steuereinheit oder durch die Arbeitsgas-Bereitstellungseinheit-Steuereinheit oder durch eine zentrale Steuereinheit erfolgen.

Auch kann der Verdichter, wenn er mit Kupplungen ausgestattet ist, beispielsweise jene Verdichter-Stufen, die für geringere Drücke als jene die gerade benötigt werden ausgelegt sind, auskuppeln. Auch diese Kupplung kann beispielsweise durch eine der genannten Steuereinheiten gesteuert bzw. geregelt werden. Das Arbeitsgas-Rückleitsystem kann neben den Ventilen beispielsweise Rohre und/oder Bohrungen zum Leiten des Arbeitsgases aufweisen.

Der Verdichter kann beispielsweise durch einen Motor, bevorzugt einen Elektromotor, angetrieben werden. Wenn das System direkt mit einem Kraftwerk in Verbindung steht, um überschüssige Energie des selbigen zu speichern, kann der Verdichter beispielsweise auch mechanisch, direkt oder indirekt, z.B. über Getrieben, mit Komponenten, wie z.B. Turbinen, des Kraftwerks verbunden sein. Auch kann das System beispielsweise so ausgebildet sein, dass es möglich ist, beispielsweise mittels Kupplungen zwischen diesen beiden Antriebsarten umzuschalten. Der Motor sowie die optionale Kupplung können beispielsweise durch eine der Steuereinheiten gesteuert werden.

Gemäß einem weiteren Aspekt der Erfindung weist jeder Flüssigkeitsbehälter ein Entlüftungsventil auf, das beim Befüllen des Flüssigkeitsbehälters mit Flüssigkeit in seinem geöffneten Zustand zum Entlüften des Flüssigkeitsbehälters dient und das in seinem geschlossenen Zustand ein Entweichen des durch die Arbeitsgas-Bereitstellungseinheit eingebrachten Arbeitsgases verhindert.

Das Entlüftungsventil kann zum Zweck des Entlüftens derart dimensioniert bzw. ausgelegt oder steuerbar konfiguriert sein, dass sich im Inneren des zu entlüftenden Flüssigkeitsbehälters ein erwünschter bzw. definierter Gegendruck aufbaut. Bevorzugt ist das Entlüftungsventil jedoch derart dimensioniert bzw. ausgelegt oder steuerbar konfiguriert, dass während der Befüllung des Flüssigkeitsbehälters in dem Flüssigkeitsbehälter ein im Wesentlichen konstanter Druck herrscht, der in etwa dem Umgebungsdruck entspricht. Das Entlüftungsventil stellt also sicher, dass das Gas ausreichend schnell entweichen kann, ohne dass sich ein signifikanter Gegendruck aufbaut.

Im geschlossenen Zustand des Entlüftungsventils kann das mit Hilfe der Arbeitsgas-Bereitstellungseinheit eingebrachte Gas nicht entweichen und drückt daher mit konstantem Arbeitsgasdruck von oben her auf die Oberfläche der Flüssigkeit in dem Flüssigkeitsbehälter.

Ist nun im Betrieb das Entlüftungsventil des ersten Flüssigkeitsbehälters, in dem das Arbeitsgas mit seinem Arbeitsgasdruck auf die Flüssigkeit drücken soll, geschlossen und das Entlüftungsventil des zweiten Flüssigkeitsbehälters, in den die Flüssigkeit von dem ersten Flüssigkeitsbehälter überführt werden soll, geöffnet, herrscht zwischen den Flüssigkeitsbehältern eine im wesentlichen konstante Druckdifferenz, die mit Hilfe der Arbeitsgas-Bereitstellungseinheit aufrecht erhalten wird, während die Flüssigkeit von dem ersten Flüssigkeitsbehälter durch die Turbineneinheit in den zweiten Flüssigkeitsbehälter fließt.

Dies führt zu einem konstanten Durchfluss, also zu einem konstanten Massenstrom der Flüssigkeit durch die Turbineneinheit und damit zu einem konstanten Leistungs-Output, insbesondere mit konstanter Drehzahl der Turbine und folglich auch konstanter Frequenz des damit erzeugten elektrischen Stroms. Dies erleichtert die Energieeinspeisung ins Stromnetz und verursacht weniger Verluste, als wenn die Leistung und Frequenz im großen Stil mittels mechanischer, hydrodynamischer (hier wird die konstante Drehzahl bei den Turbinen über die Düsen, insbesondere die Düsennadeln(-stellung) (Menge / Druck), geregelt) oder elektronischer Maßnahmen auf das Soll geregelt werden müsste. Selbstverständlich können solche Methoden, insbesondere die Düsennadeln(-stellung), auch hier angewendet werden, um den Betrieb der Turbineneinheit und die Stromeinspeisung zu optimieren. Durch die direkte Einflussnahme auf die Düsennadeln (z.B. Ihre Stellungen) kann die Drehzahl der Turbine sehr genau justiert, insbesondere auch relativ rasch justiert, und konstant gehalten werden. Allerdings können diese Maßnahmen auf einen konstanten Betrieb optimiert eingestellt werden, und müssen nicht im Laufe eines Energiebereitstellungszyklus dynamisch über einen weiten Betriebsbereich angepasst werden.

Erfindungsgemäß weist das System mehr als zwei Flüssigkeitsbehälter auf, wobei das System derart konfiguriert ist, dass die Flüssigkeit der Reihe nach durch alle Flüssigkeitsbehälter hindurch immer nur zwischen zwei Flüssigkeitsbehältern von dem einen Flüssigkeitsbehälter zum nächsten Flüssigkeitsbehälter beförderbar ist.

Dadurch, dass immer zwei Flüssigkeitsbehälter an der Energiebereitstellung beteiligt sind, kann das Arbeitsgas aus einem dritten Flüssigkeitsbehälters, der nach dem Energiebereitstellungszyklus, in dem er involviert war, unter Restdruck steht, in Ruhe und auf Effizienz bedacht zur Arbeitsgas-Bereitstellungseinheit zurückgeführt werden. Eine Unterbrechung, wie es bei anderen Systemen der Fall ist, wird nicht benötigt. So kann mit Ausnahme der kurzen An- und Auslaufphasen, die verhältnismäßig kurz sind, kontinuierlich Strom generiert werden.

Steht beispielsweise ein Flüssigkeitsbehälter mit einem Raumvolumen von einer Million Kubikmeter unter einem Restdruck von 100 Bar kann die in Form des komprimierten Arbeitsgases gespeicherte (wertvolle) Energie durch die Rückführung in den Verdichter genützt werden, um ca. 50 % Energie beim Verdichten des Arbeitsgases auf ca. 150 Bar einzusparen.

Um diese Phasen auch noch zu überwinden, können neben den zuvor genannten Set aus drei Flüssigkeitsbehältern, ein weiteres Set aus drei Flüssigkeitsbehältern Phasenverschoben arbeiten, sodass immer ein Set in der kontinuierlichen Energiebereitstellungsphase ist, während sich das andere Set in der kurzen An- und/oder Auslaufphase befindet.

Auch ein System aus zwei Sets mit je zwei Flüssigkeitsbehältern ist möglich, wenn die kontinuierliche Energiebereitstellungsphase und die An- und Auslaufphasen entsprechend geschickt gestaltet sind.

Des Weiteren können die Sets auch aus mehreren Flüssigkeitsbehältern bestehen, die hintereinander geschalten sind, oder es können auch mehrere Sets nebeneinander in verschiedenen Phasen laufen.

All diese Konfigurationen gehen mit dem Vorteil einher, dass das Wasser, welches durch den Druck des Arbeitsgases befördert wird, direkt auf die Turbine einwirkt. Somit ergibt sich ein wesentlich verbesserter Wirkungsgrad im Vergleich zu Systemen, bei denen das Arbeitsgas direkt auf eine Turbine wirkt.

Abschließend sei der Vollständigkeit wegen noch darauf hingewiesen, dass alle Behälter wie auch Leitungen, also sowohl die flüssigkeitsführenden also auch die gasführenden Komponenten des Systems, inklusive ihrer Verbindungen und Ventile usw. auf den im System bzw. im jeweiligen Teilsystem herrschenden oder maximal zu erwartenden Druck mit ausreichend Sicherheit dimensioniert sein müssen. Dies stellt sicher, dass das System nicht nur innerhalb seines Betriebsbereiches sondern auch mit ausreichend Reserve druckbeständig ist.

Diese und weitere Aspekte der Erfindung ergeben sich durch die nachfolgend erörterten Figuren.

### Figurenkurzbeschreibung

Die Erfindung wird im Folgenden unter Hinweis auf die beigefügten Figuren anhand von Ausführungsbeispielen noch einmal näher erläutert, auf welche die Erfindung jedoch nicht beschränkt ist. Dabei sind in den verschiedenen Figuren gleiche Komponenten mit identischen Bezugszeichen versehen. Es zeigen auf schematische Weise:
Fig. 1 ein System zur Energiespeicherung und Energierückgewinnung mit drei Flüssigkeitsbehältern;
Fig. 2 - 4 das System gemäß der Figur 1 in jeweils einer Momentaufnahme zu Beginn eines Energiebereitstellungszyklus.

### Beschreibung der Ausführungsbeispiele

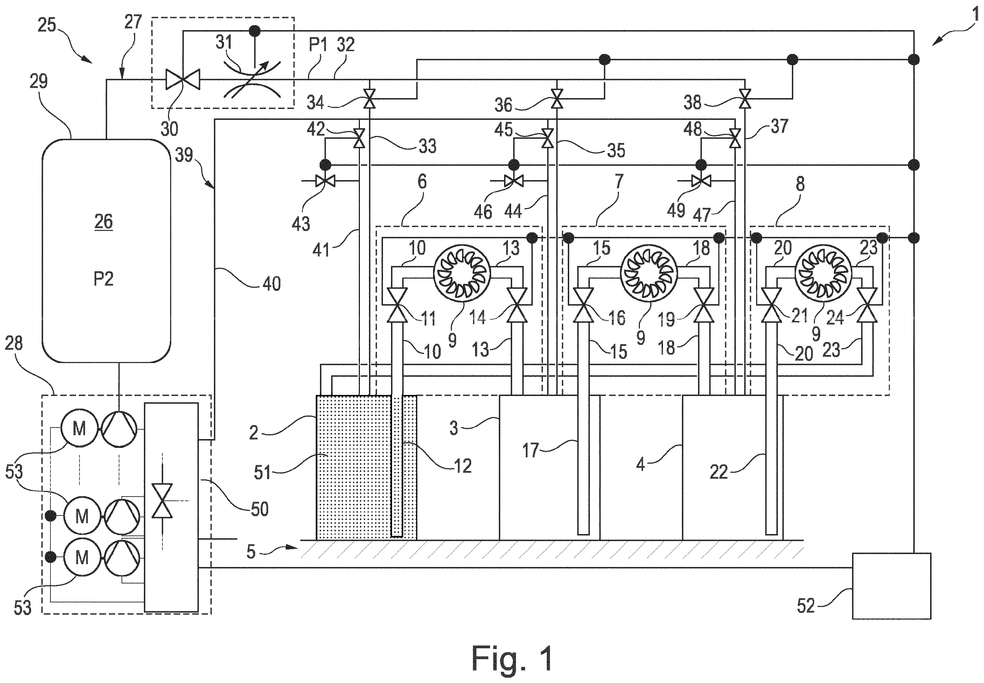

In der Figur 1 ist eine System 1 zur Energiespeicherung und Energierückgewinnung, nachfolgend kurz System 1 genannt, dargestellt.

Das System 1 weist einen erste, zweiten und dritten Flüssigkeitsbehälter 2, 3, und 4 auf, wobei jeder Flüssigkeitsbehälter 2 - 4 ein Fassungsvermögen beispielsweise von ca. 1 Million Kubikmeter Wasser hat und alle Flüssigkeitsbehälter 2 - 4 auf einer ebenen Bodenplatte 5 stehen, sodass sie sich auf gleichem Niveau befinden. Die Flüssigkeitsbehälter 2-4 sind aus Beton/Stahlbeton gefertigt und so aufgebaut, dass diese mit ausreichender Sicherheit den im System 1 herrschenden Drücken standhalten, was im Übrigen auch für alle anderen Komponenten des Systems 1 zutrifft.

Das System 1 weist weiterhin eine erste, zweite und dritte Turbineneinheit 6, 7 und 8 auf, wobei die Turbineneinheiten mit Peltonturbinen 9 zur Stromerzeugung ausgerüstet sind, die wie an der Figur 1 dargestellt oberhalb der Flüssigkeitsbehälter 2 - 4 installiert sind. Die Peltonturbinen 9 sind jeweils an einen Generator (nicht dargestellt) angeschlossen, sodass diese Einheit aus Turbine und Generator Bewegungsenergie in elektrische Energie umwandeln kann.

Die erste Turbineneinheit 6 verbindet den ersten Flüssigkeitsbehälter 2 mit dem zweiten Flüssigkeitsbehälter 3 derart, dass die Flüssigkeit von dem ersten Flüssigkeitsbehälter 2 durch die Peltonturbine 9 in den zweiten Flüssigkeitsbehälter 3 fließen kann und dabei die Peltonturbine 9 antreibt. Im Detail weist die erste Turbineneinheit 6 zulaufseitig eine erste Turbinen-Zulaufverrohrung 10 mit einem ersten Turbinen-Zulaufventil 11 und mit einer ersten Steigleitung 12 auf, die bis nahe an den Boden des ersten Flüssigkeitsbehälter 2 oder seine pumpensumpfähnliche Vertiefung reicht und dort den Flüssigkeitsaustritt aus dem ersten Flüssigkeitsbehälter 2 ermöglicht. Ablaufseitig weist die erste Turbineneinheit 6 eine erste Ablaufverrohrung 13 mit einem ersten Ablaufventil 14 auf, wobei die erste Ablaufverrohrung 13 oben an den zweiten Flüssigkeitsbehälter 3 angekoppelt ist und dort den Flüssigkeitseintritt in diesen ermöglicht.

(Wenn der zweite Zyklus beginnt, das heißt, die Flüssigkeit aus dem zweiten Flüssigkeitsbehälter wird über die Turbine zum Flüssigkeitsbehälter 3 geleitet, muss der erste Flüssigkeitsbehälter, der ja unter z.B. 100 Bar Druckluft steht, über die Verdichterstation zum Druckspeicher zurück geführt. Dadurch werden ca. 50 % Energie eingespart, da die Verdichterstation mit komprimierter Druckluft im Mittel 50 Bar versorgt wird, zum Sollwert z.B. 150 Bar angehoben und im Druckspeicher zur Wiederverwendung gelagert wird.)

Die zweite Turbineneinheit 7 verbindet den zweiten Flüssigkeitsbehälter 3 mit dem dritten Flüssigkeitsbehälter 4 derart, dass die Flüssigkeit von dem zweiten Flüssigkeitsbehälter 3 durch die Peltonturbine 9 in den dritten Flüssigkeitsbehälter 4 fließen kann und dabei die Peltonturbine 9 antreibt. Im Detail weist die zweite Turbineneinheit 7 zulaufseitig eine zweite Turbinen-Zulaufverrohrung 15 mit einem zweiten Turbinen-Zulaufventil 16 und mit einer zweiten Steigleitung 17 auf, die bis nahe an den Boden des zweiten Flüssigkeitsbehälter 3 oder seine pumpensumpfähnliche Vertiefung reicht und dort den Flüssigkeitsaustritt aus dem zweiten Flüssigkeitsbehälter 3 ermöglicht. Ablaufseitig weist die zweite Turbineneinheit 7 eine zweite Ablaufverrohrung 18 mit einem zweiten Ablaufventil 19 auf, wobei die zweite Ablaufverrohrung 18 oben an den dritten Flüssigkeitsbehälter 4 angekoppelt ist und dort den Flüssigkeitseintritt in diesen ermöglicht.

Die dritte Turbineneinheit 8 verbindet den dritten Flüssigkeitsbehälter 4 mit dem ersten Flüssigkeitsbehälter 2 derart, dass die Flüssigkeit von dem dritten Flüssigkeitsbehälter 4 durch die Peltonturbine 9 in den ersten Flüssigkeitsbehälter 2 fließen kann und dabei die Peltonturbine 9 antreibt. Im Detail weist die dritte Turbineneinheit 8 zulaufseitig eine dritte Turbinen-Zulaufverrohrung 20 mit einem dritten Turbinen-Zulaufventil 21 und mit einer dritten Steigleitung 22 auf, die bis nahe an den Boden des dritten Flüssigkeitsbehälter 4 oder seine pumpensumpfähnliche Vertiefung reicht und dort den Flüssigkeitsaustritt aus dem dritten Flüssigkeitsbehälter 4 ermöglicht. Ablaufseitig weist die dritte Turbineneinheit 8 eine dritte Ablaufverrohrung 23 mit einem ersten Ablaufventil 24 auf, wobei die dritte Ablaufverrohrung 24 oben an den ersten Flüssigkeitsbehälter 2 angekoppelt ist und dort den Flüssigkeitseintritt in diesen ermöglicht.

Das System 1 weist weiterhin eine Arbeitsgas-Bereitstellungseinheit 25 zur Bereitstellung eines Arbeitsgases 26 als Luft mit einem im Wesentlichen konstanten Arbeitsgasdruck P1 auf, wobei die Arbeitsgas-Bereitstellungseinheit 25 ein Arbeitsgas-Zuleitungssystem 27 aufweist, welches eine Zuleitung des Arbeitsgases 26 mit konstantem Arbeitsgasdruck P1 in die Flüssigkeitsbehälter 2 - 4 ermöglicht.

Das Arbeitsgas-Zuleitungssystem 27 weist zum Zweck der Bereitstellung des Arbeitsgases 26 mit dem konstanten Arbeitsgasdrucks P1 einen mehrstufigen (hier z.B. einen dreistufigen) Verdichter 28, der zur Verdichtung von Luft, die ihm primär als Umgebungsluft eingangsseitig zugeführt wird, auf einen Speicherdruck P2, der höher als der Arbeitsdruck P1 ist, auf. Dazu weist der Verdichter 28 mehrere Motoren 53 auf, die mit elektrischer Energie aus dem Stromnetz betrieben werden können.

Ausgangsseitig ist der Verdichter 28 an einen Druckspeicher 29 angeschlossen, in dem das Arbeitsgas 26 mit dem Speicherdruck P2 gespeichert wird.

Zwischen dem Verdichter 28 und dem Druckspeicher 29 ist zweckmäßigerweise ein Rückschlagventile, das in den Figuren nicht dargestellt ist, vorgesehen.

An den Druckspeicher 29 ist das Arbeitsgas-Zuleitungssystem 27 angeschlossen, das eingangsseitig eine Absperrventil 30 aufweist, das z.B. beim Hochfahren des Systems 1 zunächst geschlossen ist, bis sich der Speicherdruck P2 aufgebaut hat. Weiterhin weist das Arbeitsgas-Zuleitungssystem 27 einen Druckregler 31, mit dessen Hilfe der Speicherdruck P2 auf den Arbeitsgasdruck P1 herabgeregelt wird.

Das Arbeitsgas-Zuleitungssystem 27 weist eine zentralen Zuleitung 32 auf, die eingangsseitig an den Druckregler 31 ankoppelt.

Von der zentralen Zuleitung 32 zweigt ein erster Zuleitungsstrang 33 ab, der ein erstes Zuleitungsventil 34 aufweist, wobei der erste Zuleitungsstrang 33 deckenseitig in den ersten Flüssigkeitsbehälter 2 mündet, sodass dort das Arbeitsgas 26 zuführbar ist, wenn das erste Zuleitungsventil 34 geöffnet ist.

Von der zentralen Zuleitung 32 zweigt ein zweiter Zuleitungsstrang 35 ab, der ein zweites Zuleitungsventil 36 aufweist, wobei der zweite Zuleitungsstrang 35 deckenseitig in den zweiten Flüssigkeitsbehälter 3 mündet, sodass dort das Arbeitsgas 26 zuführbar ist, wenn das zweite Zuleitungsventil 36 geöffnet ist.

Von der zentralen Zuleitung 32 zweigt ein dritter Zuleitungsstrang 37 ab, der ein drittes Zuleitungsventil 38 aufweist, wobei der dritte Zuleitungsstrang 37 deckenseitig in den dritten Flüssigkeitsbehälter 4 mündet, sodass dort das Arbeitsgas 26 zuführbar ist, wenn das dritte Zuleitungsventil 38 geöffnet ist.

Die Arbeitsgas-Bereitstellungseinheit 25 weist weiterhin ein Arbeitsgas-Rückleitungssystem 39 auf, das es erlaubt, das sich in den Flüssigkeitsbehältern 2 - 4 befindliche und unter Druck stehende Arbeitsgas 26 zum Verdichter 28 zurückzuführen und dort zu verwerten, also den Druck des Arbeitsgases 26 zu nützen, so dass nicht bei jedem Nachfüllen des Druckspeichers 29 die Umgebungsluft vom Druck der Umgebungsluft weg komprimiert werden muss.

Das Arbeitsgas-Rückleitungssystem 39 weist eine zentralen Rückleitung 40 auf, die ausgangsseitig in den Verdichter 28 mündet.

Von der zentralen Rückleitung 40 zweigt ein erster Rückleitungsstrang 41 ab, der ein erstes Rückleitungsventil 42 aufweist, wobei der erste Rückleitungsstrang 41 deckenseitig in den ersten Flüssigkeitsbehälter 2 mündet, so dass von dort das Arbeitsgas 26 zum Verdichter 28 zurückführbar ist, wenn das erste Rückleitungsventil 42 geöffnet ist. Zwischen dem ersten Rückleitungsventil 42 und der Einmündung des ersten Rückleitungsstrangs 41 in den ersten Flüssigkeitsbehälter 2 ist der erste Rückleitungsstrang 41 mit einem zur Umgebung hin offenen ersten Entlüftungsventil 43 gekoppelt, mit dem ein Entlüften des ersten Flüssigkeitsbehälters 2 hin zur Umgebung möglich ist, wenn das erste Entlüftungsventil 43 geöffnet ist.

Von der zentralen Rückleitung 40 zweigt ein zweiter Rückleitungsstrang 44 ab, der ein zweites Rückleitungsventil 45 aufweist, wobei der zweite Rückleitungsstrang 44 deckenseitig in den zweiten Flüssigkeitsbehälter 3 mündet, so dass von dort das Arbeitsgas 26 zum Verdichter 28 zurückführbar ist, wenn das zweite Rückleitungsventil 45 geöffnet ist. Zwischen dem zweiten Rückleitungsventil 45 und der Einmündung des zweiten Rückleitungsstrangs 44 in den zweiten Flüssigkeitsbehälter 2 ist der zweite Rückleitungsstrang 44 mit einem zur Umgebung hin offenen zweiten Entlüftungsventil 46 gekoppelt, mit dem ein Entlüften des zweiten Flüssigkeitsbehälters 3 hin zur Umgebung möglich ist, wenn das zweite Entlüftungsventil 46 geöffnet ist.

Von der zentralen Rückleitung 40 zweigt ein dritter Rückleitungsstrang 47 ab, der ein drittes Rückleitungsventil 48 aufweist, wobei der dritte Rückleitungsstrang 47 deckenseitig in den dritten Flüssigkeitsbehälter 4 mündet, so dass von dort das Arbeitsgas 26 zum Verdichter 28 zurückführbar ist, wenn das dritte Rückleitungsventil 48 geöffnet ist. Zwischen dem dritten Rückleitungsventil 48 und der Einmündung des dritten Rückleitungsstrangs 47 in den zweiten Flüssigkeitsbehälter 2 ist der dritte Rückleitungsstrang 48 mit einem zur Umgebung hin offenen dritten Entlüftungsventil 49 gekoppelt, mit dem ein Entlüften des dritten Flüssigkeitsbehälters 4 hin zur Umgebung möglich ist, wenn das dritte Entlüftungsventil 49 geöffnet ist.

Der Verdichter 28 weist eingangsseitig eine Zuluft-Selektions-Einheit 50 auf, der einerseits das vorkomprimierte Arbeitsgas 26 mit Hilfe der zentralen Rückleitung 40 zuführbar ist und der andererseits auch die Umgebungsluft zuführbar ist. Mit Hilfe der Zuluft-Selektions-Einheit 50 lässt sich selektieren, ob das vorkomprimierte Arbeitsgas 26 zur Komprimierung verwendet werden soll oder die Umgebungsluft komprimiert werden soll. Insbesondere bei Verwendung des vorkomprimierten Arbeitsgases 26 kann mit Hilfe der Zuluft-Selektions-Einheit 50 bestimmt werden, welche Stufe(n) des Verdichters 28 zur optimierten Komprimierung bzw. Verdichtung zum Einsatz kommen sollen.

Hinsichtlich der Flüssigkeitsbehälter 2 - 4 sei noch erwähnt, dass diese hermetisch abgeschlossen sind, selbstverständlich mit Ausnahme der Ankopplungen an die Arbeitsgas 26 bzw. Flüssigkeit führenden Leitungen.

Des Weiteren weist das System 1 eine Steuereinheit 52 auf, die dazu ausgebildet ist sämtliche Ventile 30, 34, 36, 38, 42, 45, 48, 43, 46, 49, 11, 14, 16, 19, 21, 24, bzw. deren Aktoren, die die entsprechenden Ventile öffnen oder schließen, die Zuluft-Selektion-Einheit 50 bzw. dessen Aktoren, sowie den Druckregler 31, bzw. dessen Aktor, sowie die Motoren 53 des Verdichters 28 zu steuern bzw. zu regeln. Als die Steuereinheit 52 kann z.B. ein zentraler Server mit entsprechender Programmierung vorgesehen sein, der seine steuernden Signale an die verschieden elektronisch ansteuerbar ausgebildeten Systemkomponenten (wie. z.B. die erwähnten Ventile usw.) abgibt. Auch können mehrere Sub-Steuereinheiten (nicht dargestellt) vorgesehen sein, die z.B. dezentral bei den jeweils zu steuernden Systemkomponenten positioniert sind, und die von einer übergeordneten Steuereinheit koordinierend angesteuert werden.

Wenn ein Energieüberangebot besteht, kann der Verdichter 28, bzw. dessen Motoren 53 angesteuert werden um Umgebungsluft oder Arbeitsgas 26 aus einem der Flüssigkeitsbehälter 2, 3, 4 auf den Speicherdruck P2 zu verdichten und in den Druckspeicher 29 zu leiten. Das bedeutet, dass die Überschüssige Energie des Stromnetzes verwendet wird, um den Druckspeicher 29 mit Arbeitsgas 26 bzw. Luft zu füllen. Insbesondere bei Verdichtung von Umgebungsluft können weitere Schritte wie Filtrierung und Entfeuchtung der Luft vorgeschaltet sein. Die Phasen zwischen Energieüberangebot und Energiebedarf sind schwankend und können unterschiedliche zeitliche Abstände haben. So ist der Energiebedarf tagsüber meist höher als nachts. Aber auch längere Zeitperioden sind möglich. So kann bei Windparks saisonal über längere Zeit ein Energieüberangebot bestehen, gefolgt von Wochen oder Monaten in denen der Energiebedarf nicht alleine (durch die Windparks ohne Energiespeicher) gedeckt werden kann. Im Druckspeicher 29 kann das Arbeitsgas 26, anders als bei vielen anderen Energiespeicher-Methoden wie Wärmespeicher oder Bewegungsenergie-Speicher, auch über lange Zeiträume gespeichert werden.

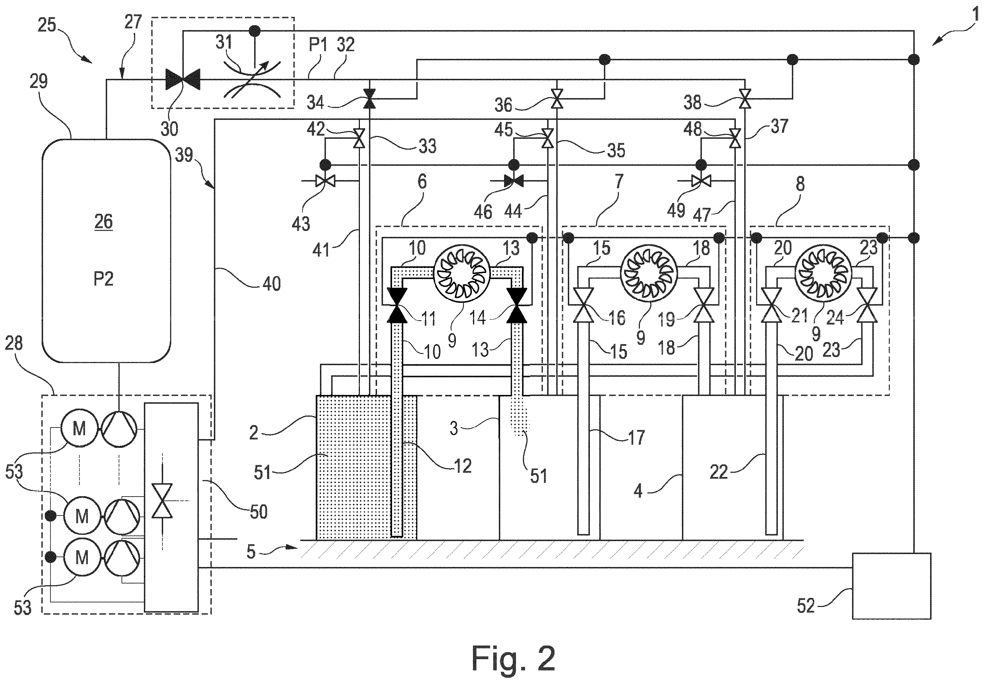

Die Figuren 2 bis 4 zeigen schemenhaft den Ablauf der Energierückgewinnung, wobei jede Figur 2, 3, 4 jeweils einen Energiebereitstellungszyklus darstellt. Hier ist zu Beginn der erste Flüssigkeitsbehälter 2 im Wesentlichen vollständig mit Flüssigkeit 51, im vorliegenden Fall Wasser, gefüllt. Die beiden anderen Flüssigkeitsbehälter 3 und 4 sind im Wesentlichen vollständig entleert. Zudem ist der Druckspeicher 29 mit Arbeitsgas 26, im vorliegenden Fall Luft, gefüllt, die einen Speicherdruck P2 aufweist, der höher als der Arbeitsdruck P1 ist.

In Figur 2 sind das Absperrventil 30, das erste Zuleitungsventil 34, das erste Turbinen-Zulaufventil 11, das erste Ablaufventil 14 sowie das zweiten Entlüftungsventil 46 geöffnet. Die restlichen Ventile sind geschlossen. Der Druckregler 31 hält den Arbeitsdruck P1 des Arbeitsgases 26 konstant. Das Arbeitsgas 26 drückt im ersten Flüssigkeitsbehälter 2 mit dem Arbeitsdruck P1 auf die Flüssigkeit 51. Dadurch wird die Flüssigkeit 51 durch die erste Turbinen-Zulaufverrohrung 10, durch das erste Turbinen-Zulaufventil 11, durch die Peltonturbine 9, durch die erste Ablaufverrohrung 13, durch das erste Ablaufventil 14, also durch die erste Turbineneinheit 6, in den zweiten Flüssigkeitsbehälter 3 gedrückt. Dadurch wird die Peltonturbine 9 sowie der dazugehörige Generator (nicht dargestellt) angetrieben. Der Generator, ggf. unter Zuhilfenahme einer Elektronik, speist die zurückgewonnene Energie ins Stromnetz (nicht dargestellt) ein. Weil das zweite Entlüftungsventil 46 geöffnet ist, kann die in den zweiten Flüssigkeitsbehälter 3 einströmende Flüssigkeit 51 die Luft durch das zweite Entlüftungsventil 46 aus dem zweiten Flüssigkeitsbehälter 3 verdrängen. Somit herrscht im zweiten Flüssigkeitsbehälter 3 ein im Wesentlichen konstanter Druck. Weil auch der Druck im ersten Flüssigkeitsbehälter 2 dem konstanten Arbeitsdruck P1 entspricht, stellt sich ein konstanter Druckunterschied zwischen den beiden Flüssigkeitsbehältern 2 und 3 ein. Dies bewirkt bei der Peltonturbine 9, dass sie (bis auf Ein- und Auslaufphase) mit konstanter Drehzahl betrieben wird.

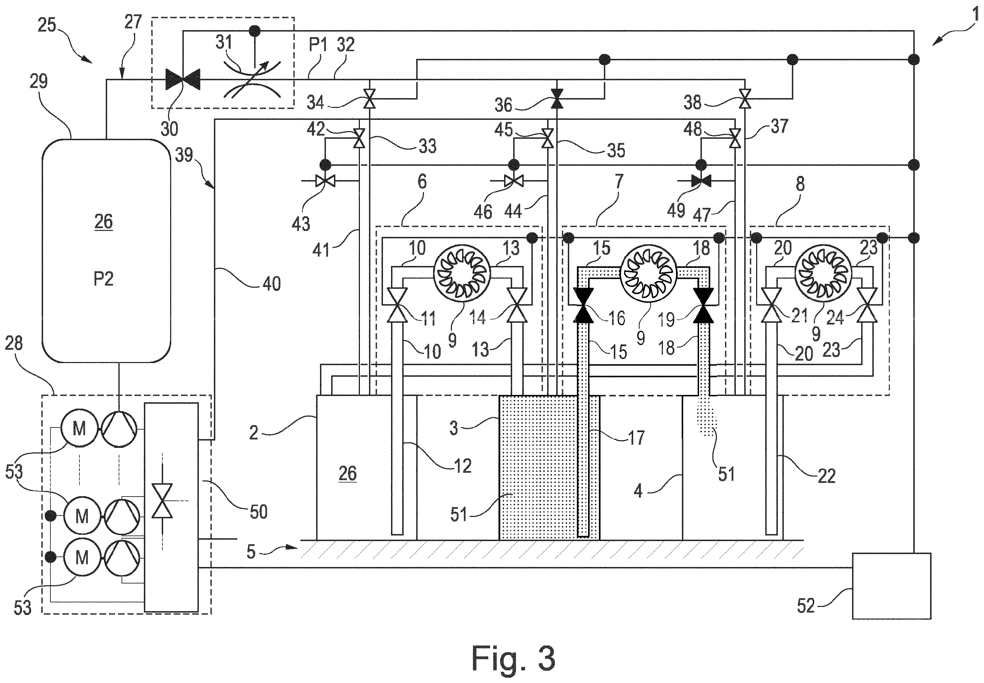

In Figur 3 sind das Absperrventil 30, das zweite Zuleitungsventil 36, das zweite Turbinen-Zulaufventil 16, das zweite Ablaufventil 19 sowie das dritte Entlüftungsventil 49 geöffnet. Die restlichen Ventile sind geschlossen. Das bedeutet, dass auch das zuvor geöffnete erste Zuleitungsventil 34, das erste Turbinen-Zulaufventil 11, das erste Ablaufventil 14 sowie das zweiten Entlüftungsventil 46 jetzt geschlossen ist. Der Druckregler 31 hält den Arbeitsdruck P1 des Arbeitsgases 26 konstant. Das Arbeitsgas 26 drückt im zweiten Flüssigkeitsbehälter 3 mit dem Arbeitsdruck P1 auf die Flüssigkeit. Dadurch wird die Flüssigkeit durch die zweite Turbinen-Zulaufverrohrung 15, durch das zweite Turbinen-Zulaufventil 16, durch die Peltonturbine 9, durch die zweite Ablaufverrohrung 18, durch das zweite Ablaufventil 19, also durch die zweite Turbineneinheit 7, in den dritten Flüssigkeitsbehälter 4 gedrückt. Dadurch wird die Peltonturbine 9 sowie der dazugehörige Generator angetrieben. Der Generator speist die zurückgewonnene Energie ins Stromnetz ein. Weil das dritte Entlüftungsventil 49 geöffnet ist, herrscht in Analogie zu dem zuvor erwähnten Sachverhalt im dritten Flüssigkeitsbehälter 4 ein im Wesentlichen konstanter Druck. Weil auch der Druck im zweiten Flüssigkeitsbehälter 3 dem konstanten Arbeitsdruck P1 entspricht, stellt sich wieder ein im Wesentlichen konstanter Druckunterschied zwischen den beiden Flüssigkeitsbehältern 3 und 4 ein. Somit wird auch diese Peltonturbine 9 (bis auf Ein- und Auslaufphase) mit konstanter Drehzahl betrieben.

Im ersten Flüssigkeitsbehälter 2 befindet sich noch das Arbeitsgas 26 mit einem Druck, der in etwa dem Arbeitsdruck P1 entspricht. Die Steuereinheit 52 kann nun aufgrund von internen und externen Informationen entscheiden, ob es sinnvoller ist, wie im Folgenden beschrieben, einen Hochdruck- oder einen Niederdruckmodus zu fahren. Was als sinnvoller gilt, kann je nach Wunsch des Betreibers unterschiedlich sein. So kann die Regelung beispielsweise nach wirtschaftlichen oder nach ökologischen Gesichtspunkten erfolgen. Auch kann die Belastung für die einzelnen Systemkomponenten berücksichtigt werden, und eine Langlebigkeit dieser als sinnvolle Regelung angesehen werden. Auch ein Optimum dieser Zielgrößen oder ein Kompromiss der selbigen kann von der Regelung als sinnvoll erachtet und angestrebt werden.

Der Speicherdruck P2 ist im betriebsbereiten Zustand stets höher oder mindestens gleich dem Arbeitsdruck P1. Der Speicherdruck P2 kann geringfügig höher als der Arbeitsdruck P1 sein, um das Arbeitsgas mit möglichst wenig Energiebedarf zurückführen zu können. Dieser Niederdruckmodus ermöglicht es, mehrere Energiebereitstellungszyklen möglichst effizient zu durchlaufen. So kann der Arbeitsdruck P1 beispielsweise 100 bar und der Speicherdruck P2 beispielsweise 120 (bis 150) bar betragen. Dies kann beispielsweise auch dann sinnvoll sein, wenn große aber weniger druckbeständige Druckspeicher 29, wie natürliche Untergrundspeicher, verwendet werden. In den meisten Fällen ist es jedoch wünschenswert, wenn möglichst viel Energie bei möglichst wenig Raumbedarf gespeichert werden kann.

Deswegen kann der Druckspeicher 29 auch als ein Hochdruckspeicher für Speicherdrücke P2 von beispielsweise 1000 bar ausgelegt sein. Wenn der Speicherdruck P2 relativ hoch ist, beispielsweise 1000 bar, und der Arbeitsdruck P1 im Vergleich dazu wesentlich geringer ist, beispielsweise 100 bar, kann das System 1 in einem Hochdruckmodus so betrieben werden, dass das Arbeitsgas 26, das sich am Ende des Energiebereitstellungszyklus in jenem Druckbehälter 2 befindet, der wieder mit Flüssigkeit 51 befüllt werden soll, nicht in die Arbeitsgas-Bereitstellungseinheit 25 zurückgeführt wird, sondern durch das Entlüftungsventil 43 ausgelassen wird.

Die Vorteile dieser beiden Systeme bzw. Modi lassen sich auch kombinieren. So kann bei einem Energieüberangebot das Arbeitsgas bis zu hohen Speicherdrücken von beispielsweise 1000 bar gespeichert werden. Bei Energiebedarf kann dieses dann wie für hohe Drücke beschrieben, im Hochdruckmodus, solange genutzt werden, bis eine Rückführung des Arbeitsgases (beispielsweise energetisch) sinnvoller ist. Dann kann das System wie für geringe Druckunterschiede beschrieben, im Niederdruckmodus, betrieben werden. Die Ventile werden also solange der Speicherdruck P2 wesentlich höher als der Arbeitsdruck P1 ist, so geschaltet, dass das Arbeitsgas 26 am Ende des Energiebereitstellungszyklus durch die jeweiligen Entlüftungsventile 43, 46, 49 in die Umgebung geleitet wird. Also entweicht beispielsweise das Arbeitsgas 26 aus dem Flüssigkeitsbehälter 2, nachdem die Flüssigkeit aus diesem in den Flüssigkeitsbehälter 3 befördert wurde, durch das Entlüftungsventil 43. Sobald der Speicherdruck P2 einen gewissen Schwellwert unterschritten hat, sodass der Druckunterschied zwischen Speicherdruck P2 und Arbeitsdruck P1, so gering ist, dass eine Energierückführung sinnvoll ist, werden die Ventile so geschaltet, dass das Arbeitsgas 26 durch die jeweiligen Rückleitungsstränge 41, 44, 47 und die jeweiligen Rückleitungsventile 42, 45, 48 geleitet wird. Also wird beispielsweise das Arbeitsgas 26 aus dem Flüssigkeitsbehälter 2, nachdem die Flüssigkeit 51 aus diesem in den Flüssigkeitsbehälter 3 befördert wurde, durch den Rückleitungsstrang 41 und durch das Rückleitungsventil 42 zurück in die Arbeitsgas-Bereitstellungseinheit 25 geleitet.

Diese Regelung wird durch die Steuereinheit 52 übernommen. Dazu ist das System neben den nötigen Aktoren, um die diversen Ventile, die Motoren 53 der Verdichter 28, und den Druckregler 31 zu steuern auch mit den entsprechenden üblichen Sensoren (auf deren Darstellung verzichtet wurde, um die Figuren nicht weiter zu überladen) ausgestattet. Die Steuereinheit 52ist dazu ausgebildet anhand der verschiedenen Informationen von den Sensoren, sowie von externen Faktoren wie Energiebedarf oder Energieüberschuss, zu entscheiden welcher Modus gerade am sinnvollsten ist, und die Aktoren entsprechend zu steuern.

Das bedeutet im Falle des in Figur 3 gezeigten Energiebereitstellungszyklus, bei dem die Flüssigkeit 51 vom zweiten Flüssigkeitsbehälter 3 in den dritten Flüssigkeitsbehälter 4 befördert wird, dass im Falle eines Hockdruckmodus das Arbeitsgas 26 aus dem ersten Flüssigkeitsbehälter 2 durch das erste Entlüftungsventil 43 entweicht. Im Falle eines Niederdruckmodus wird das Arbeitsgas 26 durch den ersten Rückleitungsstrang 41 und durch das erste Rückleitungsventil 42, durch die zentrale Rückleitung 40 in die Zuluft-Selektion-Einheit 50 geleitet. Hier wird das Arbeitsgas 26 durch die, für den jeweiligen Druck optimale Verdichter-Stufe(n) des Verdichters 28, auf den Speicherdruck P2 verdichtet und in den Druckspeicher 29 geleitet.

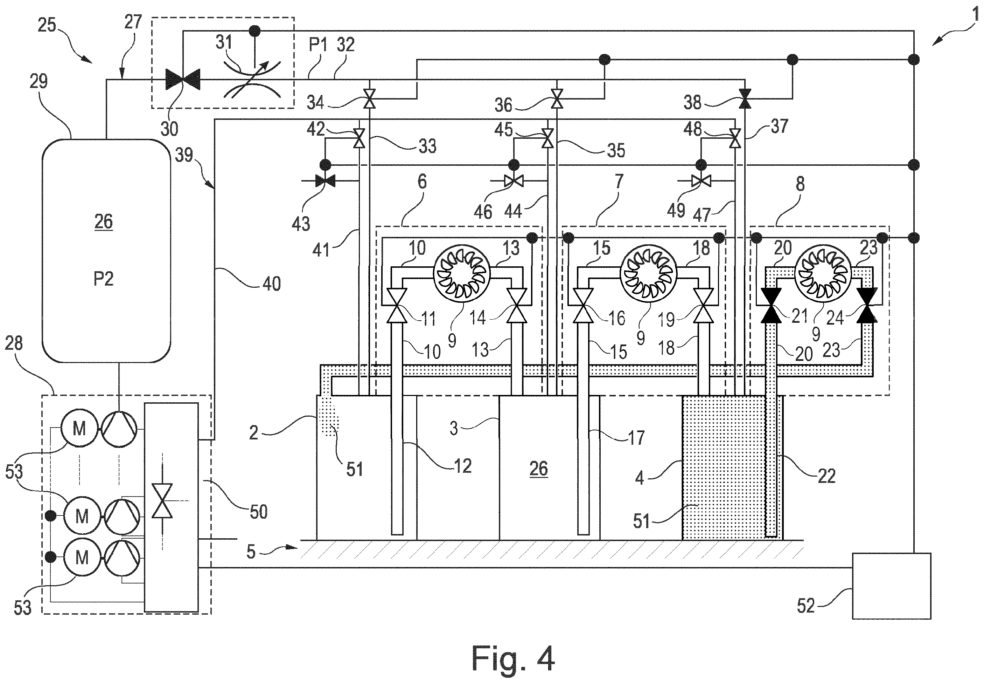

In Figur 4 sind das Absperrventil 30, das dritte Zuleitungsventil 38, das dritte Turbinen-Zulaufventil 21, das dritte Ablaufventil 24 sowie das erste Entlüftungsventil 43 geöffnet. Die restlichen Ventile sind geschlossen. Das bedeutet, dass auch das zuvor geöffnete zweite Zuleitungsventil 36, das zweite Turbinen-Zulaufventil 16, das zweite Ablaufventil 19 sowie das dritte Entlüftungsventil 49 jetzt geschlossen ist. Der Druckregler 31 hält den Arbeitsdruck P1 des Arbeitsgases 26 konstant. Das Arbeitsgas 26 drückt im dritten Flüssigkeitsbehälter 4 mit dem Arbeitsdruck P1 auf die Flüssigkeit 51. Dadurch wird die Flüssigkeit 51 durch die dritte Turbinen-Zulaufverrohrung 20, durch das dritte Turbinen-Zulaufventil 21, durch die Peltonturbine 9, durch die dritte Ablaufverrohrung 23, durch das dritte Ablaufventil 24, also durch die dritte Turbineneinheit 8, in den ersten Flüssigkeitsbehälter 2 gedrückt. Dadurch wird die Peltonturbine 9 sowie der dazugehörige Generator angetrieben. Der Generator speist die zurückgewonnene Energie ins Stromnetz ein. Weil das erste Entlüftungsventil 43 geöffnet ist, herrscht im ersten Flüssigkeitsbehälter 2 ein konstanter Druck. Weil auch der Druck im dritten Flüssigkeitsbehälter 4 dem konstanten Arbeitsdruck P1 entspricht, stellt sich ein konstanter Druckunterschied zwischen den beiden Flüssigkeitsbehältern 4 und 2 ein. Die Peltonturbine 9 wird also (bis auf Einund Auslaufphase) mit konstanter Drehzahl betrieben.

Abhängig vom Speicherdruck P2 in Relation zum Arbeitsdruck P1, sowie den weiteren internen und externen Informationen startet die Steuereinheit 52nun für den mit Arbeitsgas 26 gefüllten zweiten Flüssigkeitsbehälter 3 einen Hochdruckmodus oder einen Niederdruckmodus. Im Falle eines Hockdruckmodus wird das Arbeitsgas 26 aus dem zweiten Flüssigkeitsbehälter 3 durch das zweite Entlüftungsventil 46 abgelassen. Im Falle eines Niederdruckmodus wird das Arbeitsgas 26 durch den zweiten Rückleitungsstrang 44 und durch das zweite Rückleitungsventil 45 und durch die zentrale Rückleitung 40 in die Zuluft-Selektion-Einheit 50 geleitet. Hier wird das Arbeitsgas 26 durch die, für den jeweiligen Druck optimale Verdichter-Stufe(n) des Verdichters 28, auf den Speicherdruck P2 verdichtet und in den Druckspeicher 29 geleitet.

Nun kann der Energiebereitstellungszyklus wie in Figur 2 dargestellt erneut beginnen. Die Energierückgewinnung über die Serie der Energiebereitstellungszyklen kann also nahtlos ablaufen, und zwar so dass auf die zwischenzeitliche Befüllung von zusätzlichen Behältern ohne eine Energierückgewinnung verzichte werden kann.

Beim Verdichten des Arbeitsgases 26 im Verdichter 28 entsteht Wärme. Um den Wirkungsgrad des Systems 1 zu verbessern, kann diese Wärme in Wärmespeichern gespeichert werden. Sie kann dann zu einem späteren Zeitpunkt, wenn ein Energiebedarf besteht, und das Arbeitsgas 26 durch den Druckregler 31 entspannt und dadurch abgekühlt wird, genutzt werden, um das sich entspannende Arbeitsgas 26 zu erwärmen.

Alternativ oder zusätzlich zudem, kann ein Wärmetauscher vorgesehen sein, der dazu ausgebildet ist, die Wärme, die beim Verdichten entsteht, vom Verdichter 28 abzuführen und zu nutzen, um Wasser zu verdampfen, das eine Dampfturbine antreibt. Diese Bewegungsenergie kann genutzt werden, um die Effizienz des Systems 1 zu erhöhen.

Die Steuereinheit 52 verfügt über einen eigenen Notenergiespeicher, um im Falle eines Stromausfalls sich und die Aktoren mit Energie zu versorgen. Des Weiteren können die Ventile auch manuell bzw. mit entsprechendem Werkzeug bedient werden. Das System 1 ist also Schwarzstartfähig. Im Falle eines Stromausfalls kann das System 1 auch ohne fremdes zutun den Energierückgewinnungszyklus starten. Hierfür werden die Ventile wie auch beim normalen Start geschaltet. Zum Schalten der Ventile wird hierbei auf den Notenergiespeicher zurückgegriffen. Sollte dieser nicht ausreichend Energie zur Verfügung haben, können die Ventile auch manuell entsprechend geschaltet werden. Sobald der erste Energiebereitstellungszyklus begonnen hat wird ausreichend elektrische Energie für den Betrieb des Systems 1 bereitgestellt, um autonom auf die weiteren Energiebereitstellungszyklen umzuschalten.

Die Flüssigkeitsbehälter 2, 3, 4 müssen jedoch nicht zwingen wie in den Figuren anschaulich dargestellt angeordnet sein. Sie können auch platzsparend beieinanderstehen, oder so angeordnet sein, wie es entsprechend den landschaftlichen Gegebenheiten vorteilhaft ist. Sie können auch unterschiedliche Formen haben. So können sie rechteckig bzw. kubisch, aber auch kugelförmig oder zylindrisch sein. Auch ist es z.B. möglich, dass ein z.B. zylindrischer Behälter in mehrere, z.B. in drei Segmente unterteilt ist, wobei jedes Segment, wie ein hier beschriebener Flüssigkeitsbehälter agiert. Damit kann eine extrem kurze Rohrleitungsführung erreicht werden und dementsprechend der Rohrwiderstand optimiert bzw. verringert werden.

Auch wenn in den Figuren für jede Turbineneinheit 6, 7, 8 eine separate Peltonturbine 9 dargestellt ist, können diese drei Peltonturbinen 9 auch in einer einzigen Peltonturbine 9, zusammengefasst sein. In diesem Fall wird die einzige (zentrale) Peltonturbine 9 mit Hilfe der Turbineneinheiten 6, 7, 8 bedient. Diese Ausbildungsform des Systems 1 kann zu kürzeren, wenn gut abgestimmt kaum merkbaren, An- und Auslaufphasen zwischen den Energiebereitstellungszyklen führen.

Die Anzahl der Energiebreistellungszyklen, die das System 1 ohne neuerliche Aufladung des Druckspeichers 29 bereitstellen kann, hängt letztendlich von der Menge des Gases ab, die in dem Druckspeicher 29 mit dem Speicherdruck P2 gespeichert ist.

Es wird der Vollständigkeit halber darauf hingewiesen, dass die Verwendung der unbestimmten Artikel "ein" bzw. "eine" nicht ausschließt, dass die betreffenden Merkmale auch mehrfach vorhanden sein können.

## Patentansprüche

1. System zur Energiespeicherung und -rückgewinnung (1), das aufweist:
- drei oder mehr Flüssigkeitsbehälter (2, 3, 4) zur Lagerung einer Flüssigkeit (51), wobei die Flüssigkeitsbehälter (2, 3, 4) ein im Wesentlichen identes Volumen aufweisen und bevorzugt auf im Wesentlichen gleichem Niveau (5) positioniert sind, und
- eine Turbineneinheit zur Stromerzeugung (6, 7, 8), welche mindestens zwei Flüssigkeitsbehälter (2, 3, 4) miteinander verbindet und derart ausgelegt ist, dass die Flüssigkeit (51) von einem Flüssigkeitsbehälter (2) durch die Turbine (9) in einen anderen Flüssigkeitsbehälter (3) fließen kann und dabei die Turbine (9) antreibt, und
- eine Arbeitsgas-Bereitstellungseinheit (25) zur Bereitstellung eines Arbeitsgases (26), insbesondere Luft, mit einem im Wesentlichen konstanten Arbeitsgasdruck (P1), wobei die Arbeitsgas-Bereitstellungseinheit mit den Flüssigkeitsbehältern (2, 3, 4) verbunden ist und derart ausgelegt ist, dass das Arbeitsgas (26) mit besagtem konstantem Arbeitsgasdruck (P1) die Flüssigkeit (51) von einem Flüssigkeitsbehälter (2) durch die Turbineneinheit (6) in einen anderen Flüssigkeitsbehälter (3) befördert,
wobei das System derart konfiguriert ist, dass die Flüssigkeit (51) der Reihe nach durch alle Flüssigkeitsbehälter (2, 3, 4) hindurch immer nur zwischen zwei Flüssigkeitsbehältern von dem einen Flüssigkeitsbehälter zum nächsten Flüssigkeitsbehälter (2, 3, 4) beförderbar ist.

2. System nach Anspruch 1, wobei die Arbeitsgas-Bereitstellungseinheit (25) zur Rückführung und Verwertung des in einem der Flüssigkeitsbehälter (2, 3, 4) enthaltenen Arbeitsgases (26) ausgebildet ist.

3. System nach einem der vorangehenden Ansprüche, wobei die Arbeitsgas-Bereitstellungseinheit (25) einen Verdichter (28) und einen daran ausgangsseitig angeschlossenen Druckspeicher (29) aufweist, wobei der Verdichter (28) zum Verdichten von Gas, insbesondere Umgebungsluft, zwecks Speicherung des verdichteten Gases mit einem Speichergasdruck (P2) in einem Druckspeicher (29) vorgesehen ist.

4. System nach Anspruch 3 in Kombination mit Anspruch 2, wobei der Verdichter (28) als mehrstufiger Verdichter ausgeführt ist und derart konfiguriert ist, dass zur Verdichtung wahlweise die Umgebungsluft unter Einsatz aller Verdichter-Stufen oder das aus dem Flüssigkeitsbehälter (2, 3, 4) rückgeführte Arbeitsgas (26) unter Einsatz jener Verdichter-Stufe(n), die für eine Verdichtung eines Gases mit einem Druck oberhalb des Umgebungsdrucks optimiert ist/sind, zur Anwendung kommt.

5. System nach einem der vorherigen Ansprüche, wobei jeder Flüssigkeitsbehälter (2, 3, 4) ein Entlüftungsventil (43, 46, 49) aufweist, das beim Befüllen des Flüssigkeitsbehälters mit Flüssigkeit (51) in seinem geöffneten Zustand zum Entlüften des Flüssigkeitsbehälters dient und das in seinem geschlossenen Zustand ein Entweichen des durch die Arbeitsgas-Bereitstellungseinheit (25) eingebrachten Arbeitsgases (26) verhindert.

## Claims

1. Energy storage and recovery system (1) comprising:
- three or more liquid containers (2, 3, 4) for storing a liquid (51), wherein the liquid containers (2, 3, 4) have a substantially identical volume and are preferably positioned at substantially the same level (5), and
- a turbine unit for generating electricity (6, 7, 8), which connects at least two liquid containers (2, 3, 4) and is designed such that the liquid (51) can flow from one liquid container (2) through the turbine (9) into another liquid container (3), thereby driving the turbine (9), and
- a working gas supply unit (25) for supplying a working gas (26), in particular air, with a substantially constant working gas pressure (P1), wherein the working gas supply unit is connected to the liquid containers (2, 3, 4) and is designed such that the working gas (26) with said constant working gas pressure (P1) transports the liquid (51) from one liquid container (2) through the turbine unit (6) into another liquid container (3), wherein the system is configured such that the liquid (51) can only be transported sequentially through all liquid containers (2, 3, 4) between two liquid containers at a time, from one liquid container to the next liquid container (2, 3, 4).

2. System according to claim 1, wherein the working gas supply unit (25) is designed to return and utilise the working gas (26) contained in one of the liquid containers (2, 3, 4).

3. System according to one of the preceding claims, wherein the working gas supply unit (25) has a compressor (28) and a pressure accumulator (29) connected to it on the output side, wherein the compressor (28) is provided for compressing gas, in particular ambient air, for the purpose of storing the compressed gas at a storage gas pressure (P2) in a pressure accumulator (29).

4. System according to claim 3 in combination with claim 2, wherein the compressor (28) is designed as a multi-stage compressor and is configured in such a way that, for compression, either the ambient air using all compressor stages or the working gas (26) returned from the liquid container (2, 3, 4) using the compressor stage(s) that is/are optimised for compressing a gas to a pressure above the ambient pressure.

5. System according to one of the preceding claims, wherein each liquid container (2, 3, 4) has a vent valve (43, 46, 49) which, when the liquid container is filled with liquid (51), serves in its open state to vent the liquid container and, in its closed state, prevents the working gas (26) introduced by the working gas supply unit (25) from escaping.

## Revendications

1. Système de stockage et de récupération d'énergie (1) comprenant:
- trois ou plusieurs récipients de liquide (2, 3, 4) destinés au stockage d'un liquide (51), les récipients de liquide (2, 3, 4) ayant des volumes sensiblement identiques et de préférence étant positionnés sensiblement au même niveau (5), et
- une unité de turbine pour la production d'électricité (6, 7, 8), reliant au moins deux récipients de liquide (2, 3, 4) et étant conçue de telle sorte que le liquide (51) puisse s'écouler d'un récipient de liquide (2) à travers la turbine (9) vers un autre récipient de liquide (3), entraînant ainsi la turbine (9), et
- une unité d'alimentation en gaz de travail (25) pour fournir un gaz de travail (26), notamment l'air, à une pression de gaz de travail (P1) sensiblement constante, l'unité d'alimentation en gaz de travail étant reliée aux récipients de liquide (2, 3, 4) et étant conçue de telle sorte que le gaz de travail (26) transporte le liquide (51) d'un récipient de liquide (2) à travers l'unité de turbine (6) vers un autre récipient de liquide (3) à ladite pression de gaz de travail (P1) constante,
le système étant configuré de telle sorte que le liquide (51) puisse être transporté séquentiellement à travers tous les récipients de liquide (2, 3, 4), toujours uniquement entre deux récipients de liquide, d'un récipient de liquide à l'autre récipient de liquide (2, 3, 4).

2. Système selon la revendication 1, dans lequel l'unité d'alimentation en gaz de travail (25) est conçue pour la recirculation et l'utilisation du gaz de travail (26) contenu dans l'un des récipients de liquide (2, 3, 4).

3. Système selon l'une des revendications précédentes, dans lequel l'unité d'alimentation en gaz de travail (25) comprend un compresseur (28) et un accumulateur de pression (29) raccordé à celui-ci sur le côté sortie, le compresseur (28) étant prévu pour comprimer un gaz, notamment l'air ambiant, afin de stocker le gaz comprimé à une pression de gaz de stockage (P2) dans un accumulateur de pression (29).

4. Système selon la revendication 3 en combinaison avec la revendication 2, dans lequel le compresseur (28) est conçu comme un compresseur à plusieurs étages et est configuré de telle sorte que, pour la compression, optionnellement l'air ambiant soit utilisé, en ayant recours à tous les étages de compresseur, ou le gaz de travail (26) recirculé à partir du récipient de liquide (2, 3, 4) soit utilisé, en ayant recours à l'étage de compresseur ou aux étages de compresseur optimisée(s) pour la compression d'un gaz à une pression supérieure à la pression ambiante.

5. Système selon l'une des revendications précédentes, dans lequel chaque récipient de liquide (2, 3, 4) comporte une soupape d'échappement (43, 46, 49) qui, lorsque le récipient de liquide est rempli de liquide (51), sert, dans son état ouvert, à désaérer le récipient de liquide et, dans son état fermé, empêche la fuite du gaz de travail (26) introduit par l'unité d'alimentation en gaz de travail (25).
